# EUROPEAN PATENT SPECIFICATION

(11) **EP 2 084 378 B1**
(45) Date of publication and mention of the grant of the patent: **25.12.2013**
(21) Application number: 07825727.6
(22) Date of filing: 14.11.2007
(51) Int. Cl.: F02C 7/06, F01D 25/16, F01D 25/18, F02C 6/12, F16C 17/18, F16C 23/04, F16C 27/02, F16C 33/10

(54) **BEARING STRUCTURE OF TURBOCHARGER**
LAGERANORDNUNG FÜR EINEN TURBOLADER
STRUCTURE PORTEUSE D'UN TURBOCOMPRESSEUR

(30) Priority: 17.11.2006 JP 2006311810
(43) Date of publication of application: 05.08.2009
(73) Proprietor: TOYOTA JIDOSHA KABUSHIKI KAISHA, Toyota-shi, Aichi-ken, 471-8571 (JP)
(72) Inventor: MAEDA, Osamu, Toyota-shi, Aichi-ken, 471-8571 (JP)
(74) Representative: Albutt, Anthony John
(86) International application number: PCT/IB2007/003614
(87) International publication number: WO 2008/059371

(56) References cited:
- EP-A- 0 057 544
- DE-A1- 2 633 481
- DE-U1- 8 529 861
- GB-A- 2 114 684
- NL-A- 7 404 382

## Description

### BACKGROUND OF THE INVENTION

### 1. Field of the Invention

This invention relates to a bearing structure of a turbocharger that supports a rotary shaft that couples wheels with a pair of fluid bearings.

### 2. Description of the Related Art

Examples of the related-art bearing structures that support a rotary shaft include a structure that employs a ball bearing, and also include a fluid bearing that supports a rotary shaft by a fluid layer that is formed by lubrication oil ejected from a housing at a predetermined pressure as described in Japanese Patent Application Publication No. 56-138423 (JP-A-56-138423).

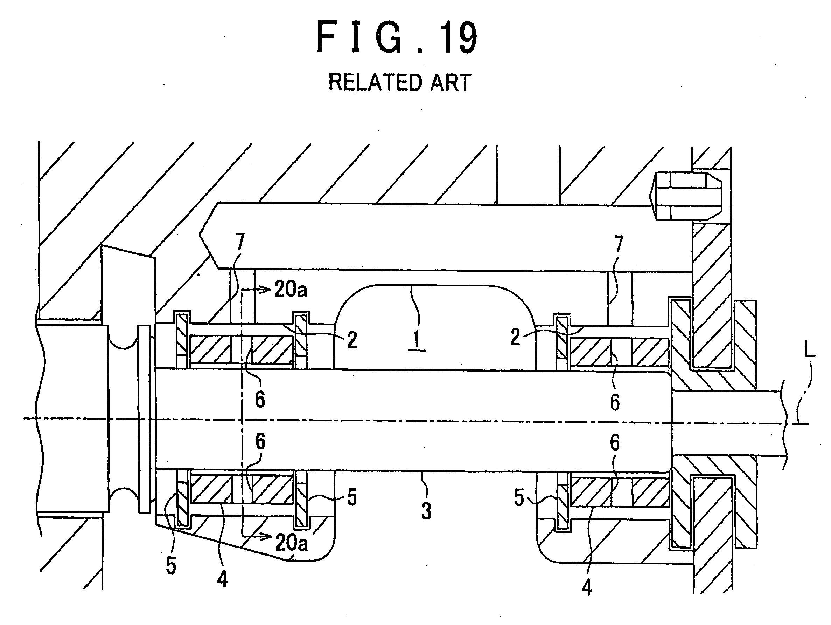

For example, in a bearing structure of a turbocharger, which rotates at highs speed, a rotary shaft 3 coupling a turbine wheel and a compressor wheel as shown in FIG 19 is inserted through two support holes 2 that are formed in a housing 1, and a cylindrical floating metal member 4 is interposed in the space between each of the support holes 2 and the rotary shaft 3. As shown in FIG 19, each floating metal member 4 is restricted in its movements in the direction of an axis thereof by snap rings 5 that are fitted into the support hole 2 at positions apart from end portions of the floating metal member 4 by a predetermined interval.

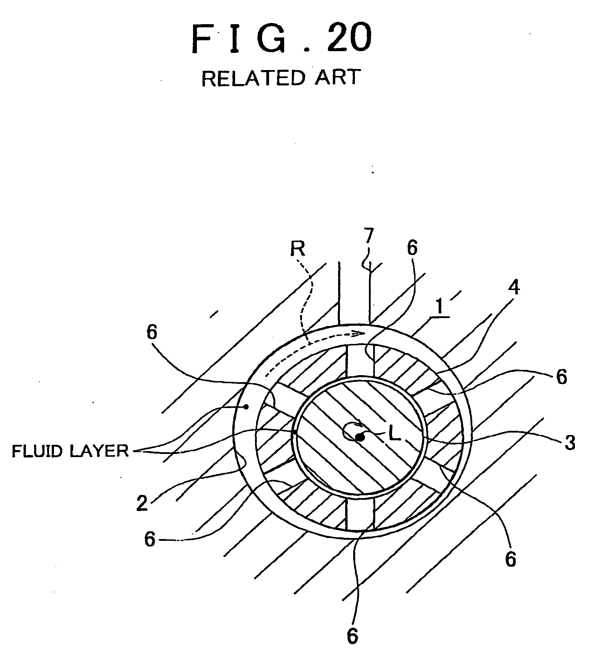

As shown in FIG 20, each floating metal member 4 has a plurality of lubrication oil introduction holes 6 that extend radially from a center axis side of the floating metal member 4 so as to link the inner and outer peripheries thereof in communication. Besides, a lubrication oil supply opening 7 that ejects lubrication oil is provided at a position in the inner peripheral surface of each support hole 2 which can face any one of the lubrication oil introduction holes 6. Incidentally, FIG 20 is a sectional view taken along a line 20a-20a in FIG. 19.
DE 85 29 861 discloses a turbocharger arrangement including an oil passage for lubrication oil.
EP 0 057 544 discloses a turbocharger assembly including floating bushes.
NL 7404382 discloses a bearing structure for a turbocharger.
DE 26 33 481 discloses a further bearing arrangement for a turbocharger.
GB 2114684 discloses a floating bush bearing arrangement for a turbocharger.

The lubrication oil ejected from the lubrication oil supply opening 7 forms a fluid layer between the inner periphery of the support hole 2 and the outer periphery of the floating metal member 4, and the lubrication oil is introduced through the lubrication oil introduction holes 6 to the inner periphery side of the floating metal member 4 to also form a fluid layer between the inner periphery of the floating metal member 4 and the outer periphery of the rotary shaft 3. These fluid layers support the rotary shaft 3.

According to this bearing structure, as the rotary shaft 3 rotates, the floating metal members 4 come to rotate in the housing I. In consequence, the rotational resistance of the rotary shaft 3 can be considerably reduced. Furthermore, since the cooling is performed by the lubrication oil on both the inner peripheral surface and the outer peripheral surface of the floating metal member 4, the seizure of the bearing portions can be effectively restrained.

However, in the foregoing bearing structure, as the rotation speed of the rotary shaft 3 rises, the fluid layers in each support hole 2 come to have revolving flows that revolve within the support hole 2 as shown by a dashed-line arrow R in FIG. 20. Incidentally, in FIG 20, the rotary shaft 3 is assumed to rotate in the direction shown by the dashed-line arrow R. It is known that due to the influence of the revolving flows, the axis L of the rotary shaft 3 undergoes revolving movement within the support holes 2 as shown by the arrow in FIG. 20. This revolving movement, called whirl vibration, is one of the factors that cause noise.

### SUMMARY OF THE INVENTION

Aspects of the invention are defined in the accompany claims.

This invention provides a bearing structure of a turbocharger that rotatably supports, via a fluid bearing, a rotary shaft that couples a pair of wheels of the turbocharger, the bearing structure being capable of restraining the occurrence of noise resulting from the whirl vibration of the rotary shaft.

A first aspect of the invention is a bearing structure of a turbocharger including: a cylindrical floating metal member having an insertion hole into which a rotary shaft that couples a pair of wheels of the turbocharger is inserted and a lubrication oil introduction hole that extends from the insertion hole and that has an opening in an outer peripheral surface of the floating metal member; a support portion having a support hole into which the rotary shaft inserted in the insertion hole is inserted together with the floating metal member, and also having a lubrication oil supply opening that is open at a position in an inner periphery of the support hole that faces the lubrication oil introduction hole; and a pair of fluid bearings in which lubrication oil ejected from the lubrication oil supply opening forms fluid layers between the support hole and an outer periphery of the floating metal member and between the insertion hole and the rotary shaft, wherein the fluid bearings are disposed apart from each other in a direction of an axis of the rotary shaft, the bearing structure being characterized in that in the floating metal member of at least one fluid bearing of the fluid bearings, an ejection hole extending from the insertion hole to the outer periphery of the floating metal member is formed at a position apart from the lubrication oil introduction hole in the direction of the axis of the rotary shaft.

According to the foregoing construction, a portion of the lubrication oil that is supplied to the space between the insertion hole and the rotary shaft and forms the fluid layers is ejected from the ejection hole toward the inner peripheral surface of the support hole by centrifugal force. Therefore, when the inner peripheral surface of the support hole and the floating metal member approach each other in association with the revolving movement of the flowing metal member caused by whirl vibration, the lubrication oil ejected from the ejection holes produces reaction force that pushes the floating metal member back toward the center axis of the support hole. This will restrain the revolving movement of the rotary shaft, and will restrain the occurrence of noise resulting from the whirl vibration of the rotary shaft.

Incidentally, although the provision of the ejection hole only in the fluid bearing of one of the fluid bearings can restrain the whirl vibration, such ejection holes may also be provided in the floating metal members of both the fluid bearings in order to more suitably restrain the vibration.

In the bearing structure of the first aspect, a plurality of ejection holes may be formed at equiangular intervals in a circumferential direction of the insertion hole.

In order to suitably restrain the whirl vibration, the number of ejection holes provided in the floating metal member may be made as great as possible. Besides, due to the formation of the ejection holes at equiangular intervals in the circumferential direction of the insertion hole, the incidence of ejection holes approaching the inner peripheral surface of the support hole increases irrespectively of the rotation phase of the floating metal member. Therefore, the reaction force that pushes the floating metal member back toward the center axis of the support hole can be stably obtained, so that the whirl vibration and therefore the occurrence of noise resulting from the whirl vibration can be more suitably restrained.

In the bearing structure of the first aspect, the floating metal member may be provided with an oil groove formed in an inner peripheral surface of the insertion hole and extending from the lubrication oil introduction hole to the ejection hole.

In the bearing structure of the first aspect, the floating metal member may be provided with an oil hole formed between the outer periphery of the floating metal member and the insertion hole and linking the lubrication oil introduction hole and the ejection hole in communication.

By adopting a construction in which an oil groove extending from the lubrication oil introduction hole to the ejection hole is formed in the inner peripheral surface of the insertion hole or a construction in which an oil hole linking the lubrication oil introduction hole and the ejection hole in communication is formed, the lubrication oil supplied through the lubrication oil introduction hole can be reliably led to the ejection hole. As a result, the amount of lubrication oil ejected from the ejection hole increases, so that the occurrence of noise by the whirl vibration can be further suitably restrained.

In the bearing structure of the first aspect, of a center-side portion that is the portion of the floating metal member on the side near the other one of the fluid bearing with respect to the lubrication oil introduction hole and a wheel-side portion that is the portion of the floating metal member on the side near an adjacent one of the wheels with respect to the lubrication oil introduction hole, at least the wheel-side portion may be provided with the ejection hole.

As the whirl vibration occurs, the rotary shaft comes to undergo revolving movement within the support hole of each of the two fluid bearings. At this time, the rotary shaft revolves while tilting about a point between the two fluid bearings which serves as a pivot. In each fluid bearing, the farther a portion thereof is from the pivot, the closer approach between the floating metal member and the inner peripheral surface of the support hole the portion experiences. In the case where, as in the first aspect, lubrication oil is ejected from the ejection hole formed in the floating metal member toward the inner peripheral surface of the support hole to produce reaction force that pushes the floating metal member toward the center axis of the support hole, the greater reaction force can be produced the shorter the distance between the ejection hole formed in the floating metal member and the inner periphery of the support hole. Therefore, if the ejection hole is provided in a portion of the floating metal member that is at the wheel side of the lubrication oil introduction hole, a result is as follows. That is, when the whirl vibration occurs, the lubrication oil is ejected from the wheel-side portion of the floating metal member, where the outer peripheral surface of the floating metal member and the inner peripheral surface of the support hole are particularly likely to approach each other, toward the inner peripheral surface of the support hole, so that the floating metal member can be suitably pushed back toward the center axis of the support hole.

In the bearing structure of the first aspect, it is permissible that, in the floating metal member, only one of a center-side portion that is the portion of the floating metal member on the side near the other one of the fluid bearing with respect to the lubrication oil introduction hole and a wheel-side portion that is the portion of the floating metal member on the side near an adjacent one of the wheels with respect to the lubrication oil introduction hole be provided with the ejection hole, and an area of an opening portion of the insertion hole on one side which is provided with the ejection hole be larger than an area of an opening portion of the insertion hole on the other side.

The lubrication oil that is supplied to a space between the insertion hole of the floating metal member and the rotary shaft through the lubrication oil introduction hole and that forms a fluid layer flows out from the opening portions of the insertion hole that are provided in the two opposite end portions of the floating metal member, that is, the opening portion in the center-side portion and the opening portion in the wheel-side portion. At this time, if, of the center-side opening portion and the wheel-side opening portion, the opening portion in or near which the ejection hole is formed is set to be larger in the area of opening than the opening portion in or near which the ejection hole is not formed, the amount of lubrication oil that flows out from the opening portion in or near which the ejection hole is formed becomes larger than the amount of lubrication oil that flows out from the opening portion in or near which the ejection hole is not formed. As a result, the lubrication oil supplied to the inner periphery of the insertion hole through the lubrication oil introduction hole flows more into portions in or near which the ejection holes are formed. Thus, the amount of lubrication oil ejected from the ejection hole can be made larger.

Concretely, the construction as described above may be realized by adopting a construction in which the insertion hole includes a taper surface whose inside diameter gradually becomes larger from the lubrication oil introduction hole toward the ejection hole.

The bearing structure of the first aspect may further include a pair of snap rings which are each disposed apart by a predetermined interval from a corresponding one of two opposite ends of the floating metal member, and of each of which an outer peripheral portion is fitted to the inner periphery of the support hole, and which restrict movement of the floating metal member in the direction of the axis.

According to this construction, movement of the floating metal member in the support hole in the direction of the axis of the rotary shaft can be suitably restrained by the two snap rings.

In the bearing structure of the first aspect, it is permissible that only one of a center-side portion that is the portion of the floating metal member on the side near the other one of the fluid bearing with respect to the lubrication oil introduction hole and a wheel-side portion that is the portion of the floating metal member on the side near an adjacent one of the wheels with respect to the lubrication oil introduction hole be provided with the ejection hole, and that, of the two snap rings, a snap ring that is closer to the ejection hole be larger in inside diameter than the other one of the snap rings.

As described above, the lubrication oil supplied to the space between the inner periphery and the rotary shaft flows out from the two opposite end portions of the floating metal member. Besides, the lubrication oil that flows out from the two opposite end portions of the floating metal member flows out from the gap between the inner periphery of each snap ring and the outer periphery of the rotary shaft. In the case where, of the two snap rings, the snap ring closer to the ejection hole is set so as to be larger in inside diameter than the other snap ring, the amount of lubrication oil that flows out from the gap between the inner periphery of the snap ring set to be larger in inside diameter and the outer periphery of the rotary shaft becomes larger than the amount of lubrication oil that flows out from the gap between the other snap ring and the rotary shaft. As a result, the amount of lubrication oil that flows out from the opening portion in or near which the ejection hole is formed is greater than the amount of lubrication oil that flows out from the opening portion in or near which the ejection hole is not formed. Therefore, the lubrication oil supplied to the inner periphery of the insertion hole through the lubrication oil introduction hole flows more into a portion in or near which the ejection hole is formed. Thus, the amount of lubrication oil ejected from the ejection hole can be made larger.

In the bearing structure of the first aspect, it is also permissible that only one of a center-side portion that is the portion of the floating metal member on the side near the other one of the fluid bearing with respect to the lubrication oil introduction hole and a wheel-side portion that is the portion of the floating metal member on the side near an adjacent one of the wheels with respect to the lubrication oil introduction hole be provided with the ejection hole, and that, of the two snap rings, a snap ring that is closer to the ejection hole be provided with a cutout formed in an inner periphery of the snap ring.

According to the construction in which only one of the center-side portion of the floating metal member that is closer to the other fluid bearing than the lubrication oil introduction hole is and the wheel-side portion of the floating metal member that is closer to an adjacent one of the wheels than the lubrication oil introduction hole is to the adjacent one of the wheels is provided with the ejection hole, and in which one of the two snap rings that is closer to the ejection hole is provided with a cutout formed in the inner periphery of the snap ring, lubrication oil will flow out from the cutout portion. Therefore, the amount of lubrication oil that flows out from the inner periphery of the snap ring closer to the ejection hole can be made larger than the amount of lubrication oil that flows out from the inner periphery of the other snap ring. Hence, the amount of lubrication oil ejected from the ejection hole can be made larger.

A second aspect of the invention is a bearing structure of a turbocharger including: a cylindrical floating metal member having an insertion hole into which a rotary shaft that couples a pair of wheels of the turbocharger is inserted and a lubrication oil introduction hole that extends from the insertion hole and that has an opening in an outer peripheral surface of the floating metal member; a support portion having a support hole into which the rotary shaft inserted in the insertion hole is inserted together with the floating metal member, and also having a lubrication oil supply opening that is open at a position in an inner periphery of the support hole that faces the lubrication oil introduction hole; and a pair of fluid bearings in which lubrication oil ejected from the lubrication oil supply opening forms fluid layers between the support hole and an outer periphery of the floating metal member and between the insertion hole and the rotary shaft, wherein the fluid bearings are disposed apart from each other in a direction of an axis of the rotary shaft, the bearing structure being characterized in that the floating metal member is provided with a lubrication oil ejection passageway that branches from the lubrication oil introduction hole and that has an opening at a position in the outer periphery of the floating metal member that is apart from an opening portion of the lubrication oil introduction hole in the outer periphery of the floating metal member in the direction of the axis of the rotary shaft.

It is also permissible to adopt a construction in which a plurality of lubrication oil ejection passageways that branch from the lubrication oil introduction hole and that each have an opening at a position in the outer periphery of the floating metal member that is apart from the opening portion of the lubrication oil introduction hole in the outer periphery of the floating metal member in the direction of the axis of the rotary shaft are formed at equal intervals around the insertion hole. In this construction, too, a portion of the lubrication oil supplied to the inner periphery of the insertion hole through the lubrication oil introduction hole is ejected from the lubrication oil ejection passageway toward the inner peripheral surface of the support hole. In consequence, as in the first aspect, when the inner peripheral surface of the support hole and the floating metal member approach each other in association with the revolving movement, the lubrication oil ejected from the lubrication oil ejection passageway produces reaction force that pushes the floating metal member back toward the center axis of the support hole. This will restrain the revolving movement of the rotary shaft, and will restrain the occurrence of noise resulting from the whirl vibration of the rotary shaft.

Incidentally, by providing the opening portion of the lubrication oil ejection passageway at a position in the outer periphery of the floating metal member that is closer to the wheel, it becomes possible to suitably push the floating metal member toward the center axis of the insertion hole as in the first aspect.

In the bearing structure of the second aspect, a plurality of lubrication oil ejection passageways may be formed so that openings of the lubrication oil ejection passageways are formed at equiangular intervals in a circumferential direction of the insertion hole of the floating metal member.

In order to suitably restrain the whirl vibration, the number of lubrication oil ejection passageways provided in the floating metal member may be made as great as possible. Besides, due to the formation of the lubrication oil ejection passageways at equiangular intervals in the circumferential direction of the insertion hole, the incidence of the opening portions of lubrication oil ejection passageways approaching the outer peripheral surface of the floating metal member increases irrespectively of the rotation phase of the floating metal member. Therefore, the reaction force that pushes the floating metal member back toward the center axis of the support hole can be stably obtained, so that the whirl vibration and therefore the occurrence of noise resulting from the whirl vibration can be more suitably restrained.

A third aspect of the invention is a bearing structure of a turbocharger including: a cylindrical floating metal member having an insertion hole into which a rotary shaft that couples a pair of wheels of the turbocharger is inserted and a lubrication oil introduction hole that extends from the insertion hole and that has an opening in an outer peripheral surface of the floating metal member, a support portion having a support hole into which the rotary shaft inserted in the insertion hole is inserted together with the floating metal member, and also having a lubrication oil supply opening that is open at a position in an inner periphery of the support hole that faces the lubrication oil introduction hole; and a pair of fluid bearings in which lubrication oil ejected from the lubrication oil supply opening forms fluid layers between the support hole and an outer periphery of the floating metal member and between the insertion hole and the rotary shaft, wherein the fluid bearings are disposed apart from each other in a direction of an axis of the rotary shaft, the bearing structure being characterized in that the support portion includes a lubrication oil ejection opening that is formed at a position in the inner periphery of the support hole which is apart from the lubrication oil supply opening in the direction of the axis of the rotary shaft and that ejects lubrication oil into the support hole.

According to the construction as in the third aspect in which a lubrication oil ejection opening that ejects lubrication oil into the support hole is provided separately from the lubrication oil supply opening, in the inner periphery of the support hole into which the rotary shaft is inserted, when the inner peripheral surface of the support hole and the floating metal member approach each other in association with the revolving movement, the lubrication oil ejected from the lubrication oil ejection opening produces reaction force that pushes the floating metal member back toward the center axis of the support hole. This will restrain the revolving movement of the rotary shaft, and will restrain the occurrence of noise resulting from the whirl vibration of the rotary shaft.

Incidentally, by providing the lubrication oil ejection opening at a position closer to the wheel, it becomes possible to suitably push the floating metal member toward the center axis of the insertion hole as in the first aspect.

In the bearing structure of the third aspect, a plurality of lubrication oil ejection openings may be formed at equiangular intervals in a circumferential direction of the support hole.

In order to suitably restrain the whirl vibration, the number of lubrication oil ejection openings provided in the support portion may be made as great as possible. Besides, due to the formation of the lubrication oil ejection openings at equiangular intervals in the circumferential direction of the support hole, the incidence of lubrication oil ejection openings approaching the outer peripheral surface of the floating metal member increases irrespectively of the rotation phase of the floating metal member and the rotary shaft in association with the whirl vibration. Therefore, the reaction force that pushes the floating metal member back toward the center axis of the support hole can be stably obtained, so that the whirl vibration and therefore the occurrence of noise resulting from the whirl vibration can be more suitably restrained.

A fourth aspect of the invention is a bearing structure of a turbocharger including: a cylindrical floating metal member having an insertion hole into which a rotary shaft that couples a pair of wheels of the turbocharger is inserted and a lubrication oil introduction hole that extends from the insertion hole and that has an opening in an outer peripheral surface of the floating metal member, a support portion having a support hole into which the rotary shaft inserted in the insertion hole is inserted together with the floating metal member, and also having a lubrication oil supply opening that is open in an inner peripheral surface of the support hole; and a pair of fluid bearings in which lubrication oil ejected from the lubrication oil supply opening forms fluid layers between the support hole and an outer periphery of the floating metal member and between the insertion hole and the rotary shaft, wherein the fluid bearings are disposed apart from each other in a direction of an axis of the rotary shaft, the bearing structure being characterized in that the lubrication oil supply opening is formed at a position that is apart in the direction of the axis of the rotary shaft from a position that faces the lubrication oil introduction hole, and lubrication oil is ejected from the lubrication oil supply opening into the support hole.

According to the construction in which the lubrication oil supply opening formed for the support hole into which the rotary shaft is inserted is provided at a distance in the direction of the axis of the rotary shaft from the position that faces the lubrication oil introduction opening formed in the floating metal member, a portion where the inner peripheral surface of the support hole and the floating metal member approach each other in association with the revolving movement experiences a phenomenon in which the lubrication oil ejected from the lubrication oil supply opening produces reaction force that pushes the floating metal member toward the center axis of the support hole. This will restrain the revolving movement of the rotary shaft, and will restrain the occurrence of noise resulting from the whirl vibration of the rotary shaft.

Incidentally, by providing the lubrication oil supply opening at a position closer to the wheel, it becomes possible to suitably push the floating metal member toward the center axis of the insertion hole as in the first aspect.

In the bearing structure of the fourth aspect, a plurality of lubrication oil supply openings may be formed at equiangular intervals in a circumferential direction of the support hole.

In order to suitably restrain the whirl vibration, the number of lubrication oil supply openings may be made as great as possible. Besides, due to the formation of the lubrication oil support openings at equiangular intervals in the circumferential direction of the support hole, the incidence of lubrication oil supply openings approaching the outer peripheral surface of the floating metal member increases irrespectively of the rotation phase of the floating metal member and the rotary shaft in association with the whirl vibration. Therefore, the reaction force that pushes the floating metal member back toward the center axis of the support hole can be stably obtained, so that the whirl vibration and therefore the occurrence of noise resulting from the whirl vibration can be more suitably restrained.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG. 1 is a sectional view schematically showing a construction of a turbocharger in accordance with a first embodiment of the invention;
FIG. 2 is an enlarged sectional view showing a portion X in FIG. 1;
FIG. 3A is a sectional view showing a structure in a section taken along a line 3a-3a in FIG. 2, and FIG. 3B is a sectional view showing a structure in a section taken along a line 3b-3b in FIG. 2;
FIG. 4 is an enlarged sectional view of a fluid bearing in accordance with the embodiment;
FIG. 5A is a side view of a floating metal member in accordance with a second embodiment of the invention, and FIG. 5B is a sectional view showing a structure in a section taken along a line 5b-5b in FIG. 5A;
FIG. 6A is a side view of a floating metal member in a modification of the second embodiment, and FIG. 6B is a sectional view showing a structure in a section taken along a line 6b-6b in FIG. 6A;
FIG. 7A is a side view of a floating metal member in accordance with a third embodiment of this invention, and FIG. 7B is a sectional view showing a structure in a section taken along a line 7b-7b in FIG 7A;
FIG. 8A is a side view of a floating metal member in a modification of the third embodiment, and FIG. 8B is a sectional view showing a structure in a section taken along a line 8b-8b in FIG 8A;
FIG. 9A is a side view of a floating metal member in accordance with a fourth embodiment of this invention, and FIG. 9B is a sectional view showing a structure in a section taken along a line 9b-9b in FIG. 9A;
FIG 10A is a side view of a floating metal member in a modification of the fourth embodiment, and FIG. 10B is a sectional view showing a structure in a section taken along a line 10b-10b in FIG 10A;
FIG. 11A is a side view of a floating metal member in a modification of the fourth embodiment, and FIG. 11B is a sectional view showing a structure in a section taken along a line 11b-11b in FIG. 11A;
FIG 12A is a side view of a floating metal member in a modification of the fourth embodiment, and FIG. 12B is a sectional view showing a structure in a section taken along a line 12b-12b in FIG 12A;
FIG 13 is an enlarged sectional view showing a fluid bearing in accordance with a fifth embodiment;
FIG. 14 is a front view of a snap ring in a modification of the fifth embodiment;
FIG. 15A is an enlarged sectional view showing a fluid bearing in accordance with a sixth embodiment, and FIG 15B is a sectional view showing a structure in a section taken along a line 15b-15b in FIG 15A;
FIG. 16A (not forming part of the claimed invention) is an enlarged sectional view showing a fluid bearing in accordance with a seventh embodiment, and FIG. 16B (not forming part of the claimed invention) is a sectional view showing a structure in a section taken along a line 16b-16b in FIG. 16A;
FIG. 17A (not forming part of the claimed invention) is an enlarged sectional view showing a fluid bearing in accordance with an eighth embodiment, and FIG 17B (not forming part of the claimed invention) is a sectional view showing a structure in a section taken along a line 17b-17b in FIG. 17A;
FIG 18 (not forming part of the claimed invention) is an enlarged sectional view showing a fluid bearing in a modification of the eighth embodiment;
FIG. 19 is a sectional view showing a bearing structure of a common turbocharger; and
FIG 20 is a sectional view showing a structure in a section taken along a line 20a-20a in FIG. 19.

### DETAILED DESCRIPTION OF EMBODIMENTS

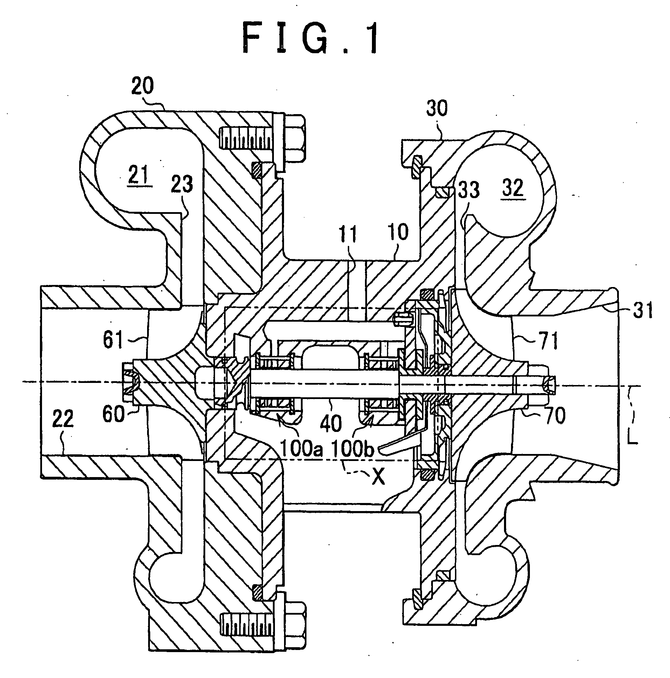

(FIRST EMBODIMENT) A first embodiment in which the invention is embodied in a bearing structure that supports a rotary shaft of a vehicular turbocharger will be described with reference to FIGS. 1 to 4.

FIG. 1 schematically shows a constructions of a turbocharger in the first embodiment. As shown in FIG. 1, the turbocharger is formed by integrally assembling a center housing 10, a turbine housing 20, and a compressor housing 30. In the center housing 10, a rotary shaft 40 is rotatably supported by a pair of fluid bearings disposed apart from each other in the direction of an axis, concretely, a fluid bearing 100a disposed at a side of a turbine wheel 60, and a fluid bearing 100b disposed at a side of a compressor wheel 70.

A supply passageway 11 for lubrication oil is formed in the center housing 10, so that lubrication oil at a predetermined pressure is supplied to the fluid bearings 100a, 100b by an oil pump (not shown). The lubrication oil supplied to the fluid bearings 100a, 100b forms fluid layers around the rotary shaft 40. The fluid layers rotatably support the rotary shaft 40.

The turbine wheel 60 is fixed to an end of the rotary shaft 40 (a left-side end portion in FIG. 1). The turbine wheel 60 has a plurality of blades 61 that extend radially from an axis L of the rotary shaft 40. On the other hand, the compressor wheel 70 is fixed to another end of the rotary shaft 40 (a right-side end portion in FIG. 1). The compressor wheel 70 has a plurality of blades 71 that extend radially from the axis L of the rotary shaft 40.

The turbine housing 20 is assembled to an end of the center housing 10 (a left-side end portion in FIG. 1). The turbine housing 20 has a scroll passageway 21 that extends so as to surround an outer periphery of the turbine wheel 60, and a discharge port 22 that extends in the direction of the axis. The scroll passageway 21 is linked in communication with an exhaust passageway of an internal combustion engine (not shown). Exhaust gas from the combustion chambers of the internal combustion engine is fed into the scroll passageway 21 via the exhaust passageway.

In the turbine housing 20, an introduction passageway 23 extends along circumferential directions of the turbine wheel 60 so as to surround the outer periphery of the turbine wheel 60. The exhaust gas in the scroll passageway 21 is blown toward the turbine wheel 60 through the introduction passageway 23. Therefore, the turbine wheel 60 rotates about the axis L. After that, the exhaust gas is discharged into the discharge port 22, and is returned to the exhaust passageway.

On the other hand, the compressor housing 30 is assembled on another end of the center housing 10 (a right-side end in FIG. 1). An intake port 31 extending in the direction of the axis of the compressor wheel 70, and a compressor passageway 32 linked in communication with an intake passageway of the internal combustion engine (not shown) so as to surround an outer periphery of the compressor wheel 70 are formed in the compressor housing 30. Furthermore, the compressor housing 30 is provided with a delivery passageway 33 for delivering to the compressor passageway 32 the air introduced into the compressor housing 30 via the intake port 31. Then, as the rotary shaft 40 rotates, the compressor wheel 70 rotates about the axis L, so that the air is forced out into the intake passageway of the internal combustion engine via the intake port 31, the delivery passageway 33 and the compressor passageway 32.

The turbocharger constructed as described above forces intake air into the combustion chambers of the internal combustion engine as the exhaust gas discharged from the internal combustion engine is blown to the turbine wheel 60 so that the turbine wheel 60 rotates and therefore the compressor wheel 70 coupled thereto via the rotary shaft 40 rotates.

In the turbocharger, the rotary shaft 40 that couples the turbine wheel 60 and the compressor wheel 70 rotates at very high speed. In the turbocharger in the first embodiment, the rotary shaft 40 is supported by the fluid bearings 100a, 100b in which fluid layers are formed by lubrication oil so as to restrain the seizure of the journal portions of the rotary shaft 40.

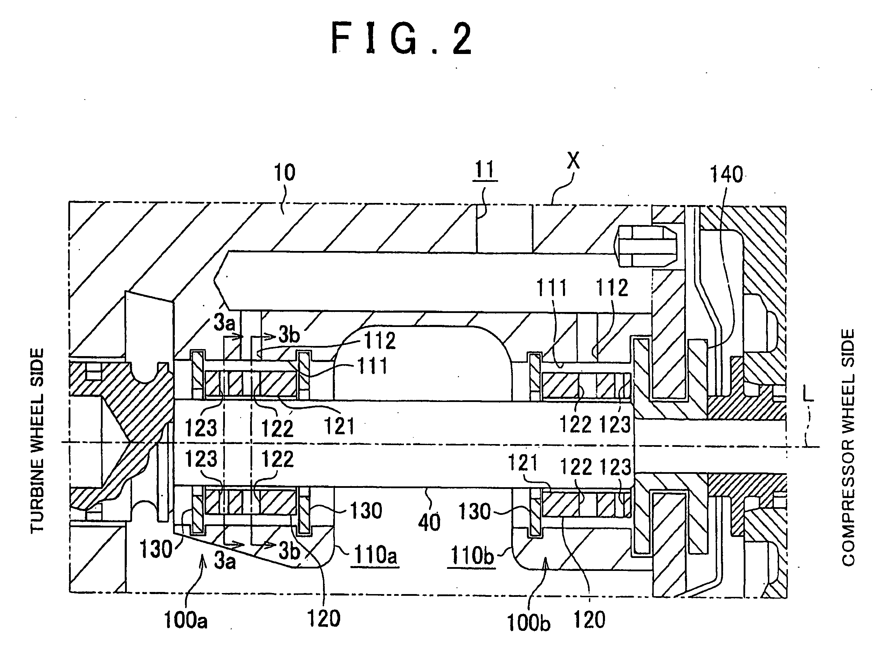

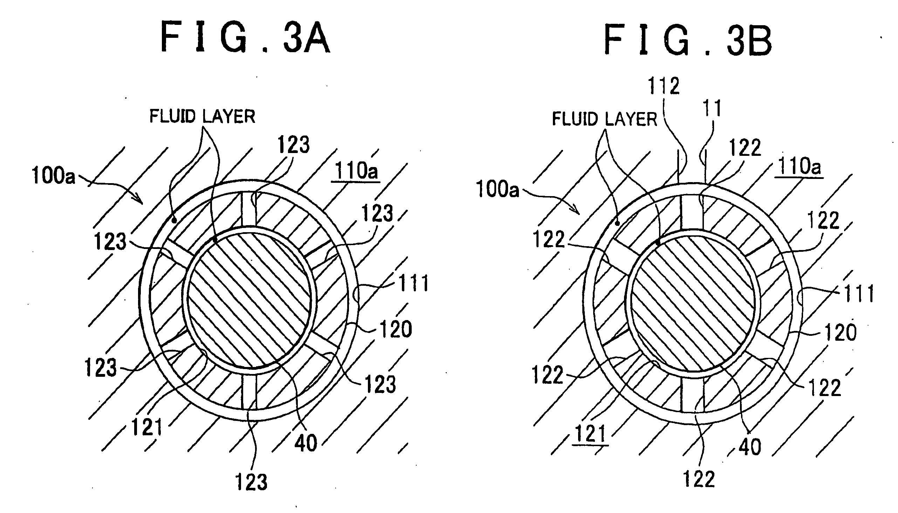

Next, the bearing structure will be described further in detail with reference to FIGS. 2, 3A and 3B. FIG 2 shows an enlarged view of a portion X enclosed by a two-dot chain line in FIG. 1. Besides, FIG. 3A is a sectional view showing a structure in a section taken along a line 3a-3a in FIG. 2, and FIG 3B is a sectional view showing a structure in a section taken along the line 3b-3b in FIG. 2.

As shown in FIG 2, the fluid bearings 100a, 100b are disposed in a support portion 110a formed at the turbine wheel side in the center housing 10, and a support portion 110b formed at the compressor wheel side in the center housing 10, respectively. Each of the support portions 110a, 110b has a support hole 111 having a sectional circular shape. The rotary shaft 40 inserted through the cylindrical floating metal member 120 is inserted together with the floating metal member 120 into the support hole 111.

The floating metal member 120 of the fluid bearing 100a is restricted in its movements in the direction of the axis by a pair of snap rings 130 whose outer peripheral portions are fitted into the support hole 111. The floating metal member 120 of the fluid bearing 100b is restricted in its movements in the direction of the axis by a snap ring 130 whose outer peripheral portions is fitted into the support hole 111 and a thrust bearing 140.

Incidentally, the fluid bearing 100a located at the turbine wheel side and the fluid bearing 100b located at the compressor wheel side have substantially the same constructions that are bilaterally symmetrical to each other. Therefore, hereinafter, only the fluid bearing 100a at the turbine wheel side will be described in detail while the description of the fluid bearing 100b at the compressor wheel side is omitted.

As shown in FIG. 3B, the floating metal member 120 has a sectionally circular insertion hole 121 into which the rotary shaft 40 is inserted, and also has six lubrication oil introduction holes 122 that extend radially from the insertion hole 121 and have openings in an outer peripheral surface of the floating metal member 120. The lubrication oil supply opening 112 of the supply passageway 11 that ejects the lubrication oil into the support hole 111 is formed at a position that can face the lubrication oil introduction hole 122. Therefore, when the lubrication oil supply opening 112 faces any one of the lubrication oil introduction holes 122 as the floating metal member 120 rotates, the lubrication oil ejected from lubrication oil supply opening 112 of the supply passageway 11 comes to be supplied to the insertion hole 121 through the lubrication oil introduction hole 122.

Furthermore, the floating metal member 120 in the fluid bearing 100a has an ejection hole 123 that extends through the floating metal member 120 from the insertion hole 121 to the outer peripheral surface, at a position at a turbine wheel side of the lubrication oil introduction hole 122 as shown in FIG. 2. As shown in FIG. 3A, six ejection holes 123 are formed at equiangular intervals in the circumferential direction of insertion holes 121.

The lubrication oil supplied through the supply passageway 11 by the oil pump and ejected from the lubrication oil supply opening 112 forms a fluid layer between the inner peripheral surface of the support hole 111 and the outer peripheral surface of the floating metal member 120, and a portion of the lubrication oil is introduced into the insertion hole 121 through the lubrication oil introduction hole 122. The thus introduced lubrication oil forms a fluid layer between the inner peripheral surface of the insertion hole 121 and the rotary shaft 40 as well.

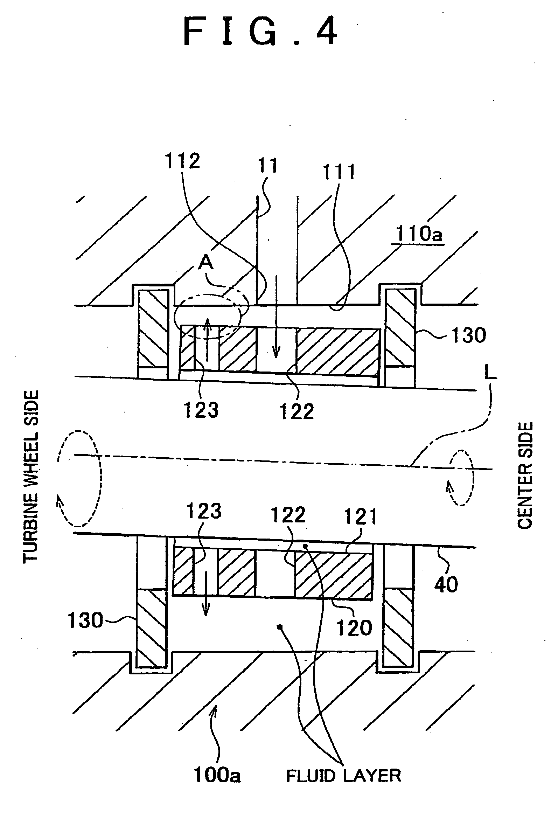

Hereinafter, operation of the bearing structure constructed as described above will be described with reference to FIG 4. FIG. 4 is an enlarged sectional view of the fluid bearing 100a at the turbine wheel side. For the sake of convenience of illustration in FIG. 4, the interval between the inner peripheral surface of the support hole 111 and the floating metal member 120, the inclination of the rotary shaft 40, etc., are exaggerated.

When the rotary shaft 40 rotates, the torque is transmitted to the floating metal member 120 due to the viscosity of the lubrication oil, so that the floating metal member 120 rotates. In consequence, a portion of the lubrication oil supplied through the lubrication oil introduction hole 122 and forming the fluid layer between the inner peripheral surface of the insertion hole 121 and the rotary shaft 40 is ejected from the ejection holes 123 toward the inner peripheral surface of the support hole 111 due to centrifugal force.

Incidentally, in the compressor wheel side fluid bearing 100b, too, the lubrication oil is ejected toward the inner peripheral surface of the support hole 111 from the ejection holes 123 that are formed at a position that is at the compressor wheel 70 of the lubrication oil introduction holes 122.

As the rotation speed of the rotary shaft 40 rises, revolving flows occur in the fluid layers. Due to the influence of the revolving flows, there occurs whirl vibration in which the floating metal member 120 undergoes revolving movement together with the rotary shaft 40 within the support hole 111. As a result, in portions of the support hole 111, the outer peripheral surface of the floating metal member 120 and the inner peripheral surface of the support hole 111 approach each other.

Incidentally, if on the aforementioned occasion, the revolution phases of the revolving movements of the fluid bearings 100a, 100b are not the same, the rotary shaft 40 tilts about an intermediate point between the two fluid bearings 100a, 100b, that is, a point at the center side of the turbocharger, which acts as a pivot point, and the rotary shaft 40 revolves within the support holes 111 of the fluid bearings 100a, 100b. Therefore, in the fluid bearing 100a, as shown by dashed-line arrows in FIG 4, the axis L of the rotary shaft 40 revolves more greatly at the turbine wheel side than at the center side. As a result, at a turbine wheel side portion of the floating metal member 120, such as a portion A indicated by a two-dot chain line FIG. 4, the outer peripheral surface of the floating metal member 120 and the inner peripheral surface of the support hole 111 particularly approach each other.

According to the first embodiment described above, the following effects are obtained. (1) When the inner peripheral surface of the support hole 111 and the floating metal member 120 approach each other in association with the revolving movement caused by whirl vibration, the lubrication oil ejected through the ejection holes 123 produces reaction force that pushes the floating metal member 120 back toward the center axis of the support hole 111. This will restrain the revolving movement of the rotary shaft 40, and will restrain the occurrence of noise resulting from the whirl vibration of the rotary shaft 40.

(2) Since the ejection holes 123 are formed at equiangular intervals in the circumferential direction of the insertion hole 121, the inner peripheral surface of the support hole 111 and an ejection holes 123 are likely to approach each other regardless of the rotation phase of the floating metal member 120. Therefore, the reaction force that pushes the floating metal member 120 back toward the center axis of the support hole 111 can be stably obtained by the lubrication oil ejected from the ejection holes 123, so that the whirl vibration and therefore the occurrence of noise resulting from the whirl vibration can be more suitably restrained.

(3) In the case where, as in the first embodiment, lubrication oil is ejected from the ejection holes 123 formed in the floating metal member 120 toward the inner peripheral surface of the support hole 111 to produce a reaction force that pushes the floating metal member 120 toward the center axis of the support hole 111, the greater reaction force can be produced the shorter the distance between the ejection holes 123 and the inner periphery of the support hole 111. In the first embodiment, the ejection holes 123 are provided at the turbine wheel side of the lubrication oil introduction holes 122. Therefore, when the whirl vibration occurs, the lubrication oil is ejected from the turbine wheel-side portion of the floating metal member 120, where the outer peripheral surface of the floating metal member 120 and the inner peripheral surface of the support hole 111 are particularly likely to approach each other, toward the inner peripheral surface of the support hole 111, so that the floating metal member 120 can be suitably pushed back toward the center axis of the support hole 111.

The foregoing first embodiment can also be carried out in the following forms that are appropriately modified. Although in the first embodiment, the floating metal member 120 is provided with the six ejection holes 123, it is also possible to adopt a construction in which the number of the ejection holes 123 formed is 1 to 5, or 7 or more. In order to restrain the occurrence of whirl vibration, as many ejection holes 123 as possible may be provided.

Furthermore, in the foregoing first embodiment, the ejection holes 123 are formed at equiangular intervals in the circumferential direction of the insertion hole 121. However, this invention is not limited by such a construction. In substantially any construction in which an ejection hole 123 for ejecting lubrication oil toward the inner peripheral surface of the support hole 111 is provided at a position in the floating metal member 120 that is apart from the lubrication oil introduction holes 122 in the direction of the axis of the rotary shaft 40, the whirl vibration can be restrained by the reaction force of the ejected lubrication oil.

Although in the above-described construction, the ejection holes 123 are provided only at a position in the floating metal member 120 that is at the turbine wheel side of the lubrication oil introduction holes 122, it is also permissible to adopt a construction in which ejection holes 123 are formed only at a position that is at the center side of the lubrication oil introduction holes 122, or a construction in which ejection holes 123 are formed at both a turbine wheel-side position and a center-side position.

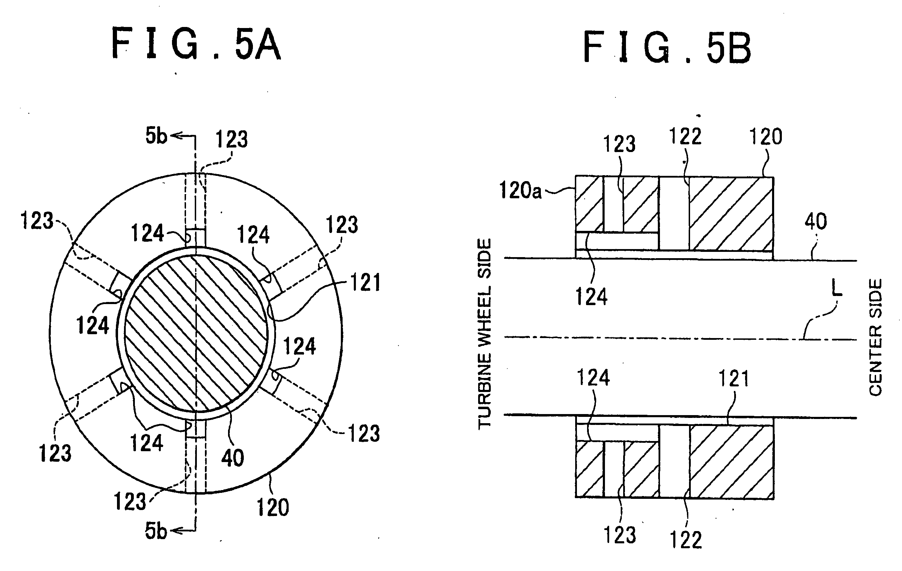

(SECOND EMBODIMENT) Hereinafter, a second embodiment of the invention will be described with reference to FIGS. 5A and 5B. The second embodiment is different from the first embodiment in the shape of the floating metal member 120. Therefore, like members will be suffixed with the same reference characters, and the description thereof will be omitted below. Differences between the two embodiments will mainly be described. FIGS. 5A and 5B show enlarged views of a floating metal member 120 in accordance with the second embodiment. FIG 5A is a side view of the floating metal member 120, and FIG. 5B is a sectional view showing a structure in a section taken along the line 5b-5b in FIG 5A.

The second embodiment has, in addition to the constructions of the first embodiment, a construction as shown in FIGS. 5A and 5B in which oil grooves 124 that extend from the lubrication oil introduction holes 122 to the ejection hole side and that reach a turbine wheel-side end portion 120a of the floating metal member 120 are formed in the inner peripheral surface of the insertion hole 121 of the floating metal member 120. Incidentally, the oil grooves 124 can be formed by cutting the inner peripheral surface of the insertion hole 121 from the side of the end portion 120a of the floating metal member 120.

According to the above-described second embodiment, the following effects can be obtained in addition to the aforementioned effects (1) to (3). (4) The lubrication oil supplied into the insertion hole 121 through the lubrication oil introduction holes 122 can be led to the ejection holes 123 more reliably through the oil grooves 124. As a result, the amount of lubrication oil ejected from the ejection holes 123 becomes large, so that the occurrence of noise by the whirl vibration can be further suitably restrained.

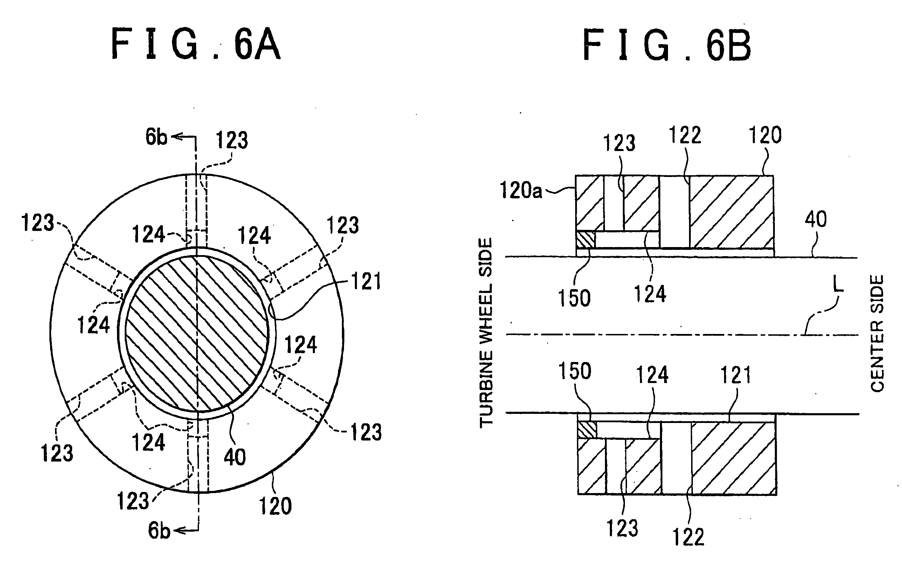

The foregoing second embodiment can also be carried out in the following forms that are appropriately modified. It suffices that the oil grooves 124 be formed so as to extend from the lubrication oil introduction holes 122 and reach the ejection holes 123. That is, the oil grooves 124 do not need to be in communication with the end portion 120a of the floating metal member 120. For example, as shown in FIGS. 6A and 6B, the opening portions of the oil grooves 124 in the end portion 120a of the floating metal member 120 may be closed by seal members 150 that are made of a resin or the like. This will reduce the amount of lubrication oil that flows out from the end portion side of the floating metal member 120, and the amount of lubrication oil ejected from the ejection holes 123 can be further increased.

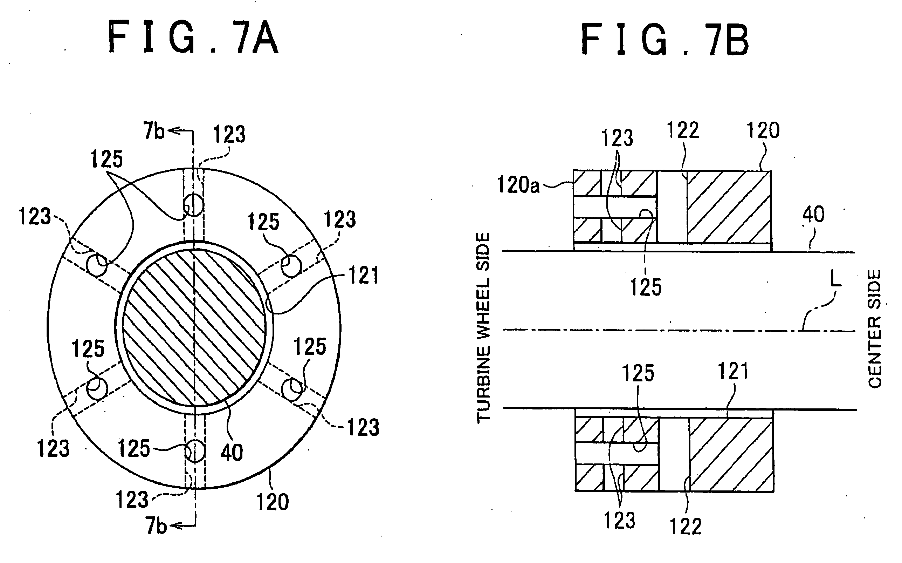

(THIRD EMBODIMENT) Hereinafter, a third embodiment will be described with reference to FIGS. 7A and 7B. The third embodiment is different from the first embodiment in the shape of the floating metal member 120. Substantially the same members as described above will be merely suffixed with the same reference characters, and the description thereof will be omitted. Differences between the two embodiments will centrally be described. FIGS. 7A and 7B show enlarged views of a floating metal member 120 in accordance with the third embodiment. FIG. 7A is a side view of the floating metal member 120, and FIG 7B is a sectional view showing a structure in a section taken along the line 7b-7b in FIG. 7A.

The third embodiment has, in addition to the constructions of the first embodiment, a construction of the floating metal member 120 as shown in FIGS. 7A and 7B in which oil holes 125 that link the lubrication oil introduction holes 122 and the ejection holes 123 in communication and that have openings in the turbine wheel-side end portion 120a of the floating metal member 120 are formed between the insertion hole 121 and the outer periphery of the floating metal member 120. Incidentally, the oil holes 125 can be formed by a drilling process, or the like.

According to the foregoing third embodiment, the following effects can be obtained in addition to the aforementioned effects (1) to (3). (5) A portion of the lubrication oil that flows in the lubrication oil introduction holes 122 is introduced into the ejection holes 123 through the oil holes 125, so that the lubrication oil supplied through the lubrication oil introduction holes 122 can be more reliably led to the ejection holes 123, As a result, the amount of lubrication oil ejected from the ejection holes 123 becomes large, so that the occurrence of noise by the whirl vibration can be further suitably restrained.

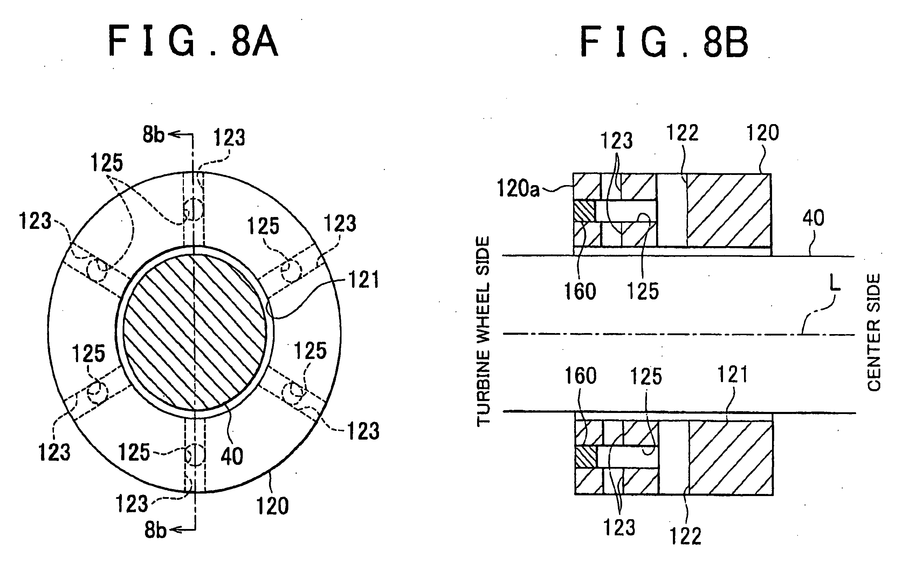

The third embodiment can also be carried out in the following modified forms. It suffices that the oil holes 125 be formed so as to extend from the lubrication oil introduction holes 122 and reach the ejection holes 123. That is, the oil holes 125 do not need to be in communication with the end portion 120a of the floating metal member 120. For example, as shown in FIGS. 8A and 8B, the opening portions of the oil holes 125 in the end portion 120a of the floating metal member 120 may be closed by seal members 160 that are made of a resin or the like. This will reduce the amount of lubrication oil that flows out from the opening portions, and the amount of lubrication oil ejected from the ejection holes 123 can be further increased.

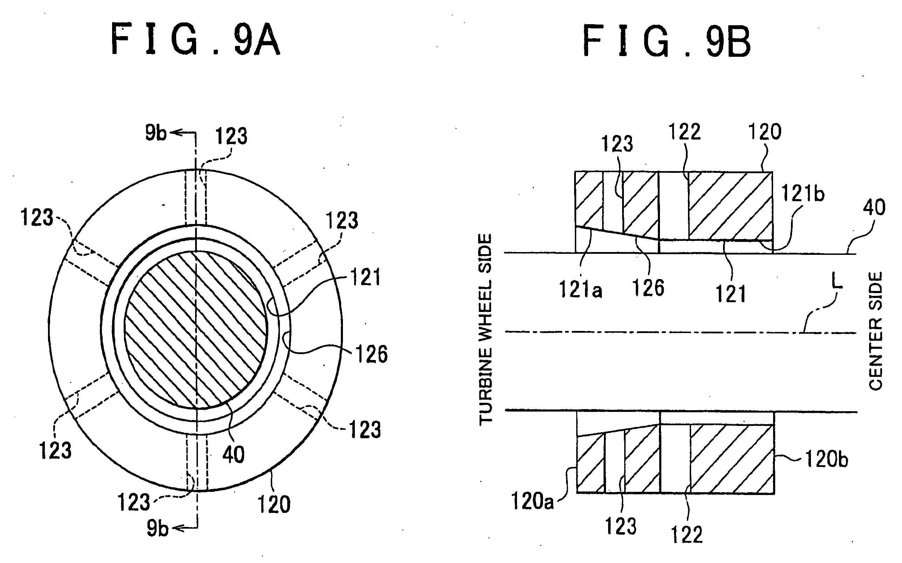

(FOURTH EMBODIMENT) Hereinafter, a fourth embodiment will be described with reference to FIGS. 9A and 9B. The fourth embodiment is different from the first embodiment in the shape of the floating metal member 120. Substantially the same members as described above will be merely suffixed with the same reference characters, and the description thereof will be omitted. Differences between the two embodiments will centrally be described. FIGS. 9A and 9B show enlarged views of a floating metal member 120 in accordance with the fourth embodiment. FIG 9A is a side view of the floating metal member 120, and FIG. 9B is a sectional view showing a structure in a section taken along the line 9b-9b in FIG. 9A.

The fourth embodiment has, in addition to the constructions of the first embodiment, a construction in which the insertion hole 121 has a taper surface 126. As shown in FIG 9B, the taper surface 126 is formed so that the inside diameter thereof gradually becomes larger from the position of the lubrication oil introduction holes 122 in the insertion hole 121 to the turbine wheel-side end portion 120a in which the ejection holes 123 are formed. Therefore, the opening area of an opening portion 121a in the turbine wheel-side end portion 120a is larger than the opening area of the opening portion 121b of the insertion hole 121 in the center-side end portion 120b.

According to the foregoing fourth embodiment, the following effects can be obtained in addition to the aforementioned effects (1) to (3). (6) The lubrication oil that is supplied to a space between the insertion hole 121 of the floating metal member 120 and the rotary shaft 40 through the lubrication oil introduction holes 122 and that forms a fluid layer flows out from the turbine wheel side opening portion 121a of the insertion hole 121 and the center-side opening portion 121b. Since the opening area of the opening portion 121a in the turbine wheel-side where the ejection holes 123 are formed is set larger than the opening area of the opening portion 121b in the center side where the ejection holes 123 are not formed, the amount of lubrication oil that flows out from the turbine wheel-side opening portion 121a is larger than the amount of lubrication oil that flows out from the center-side opening portion 121b. As a result, the lubrication oil supplied to the inner periphery of the insertion hole 121 through the lubrication oil introduction holes 122 flows more into portions in the turbine wheel side where the ejection holes 123 are formed. Thus, the amount of lubrication oil ejected from the ejection holes 123 can be made larger.

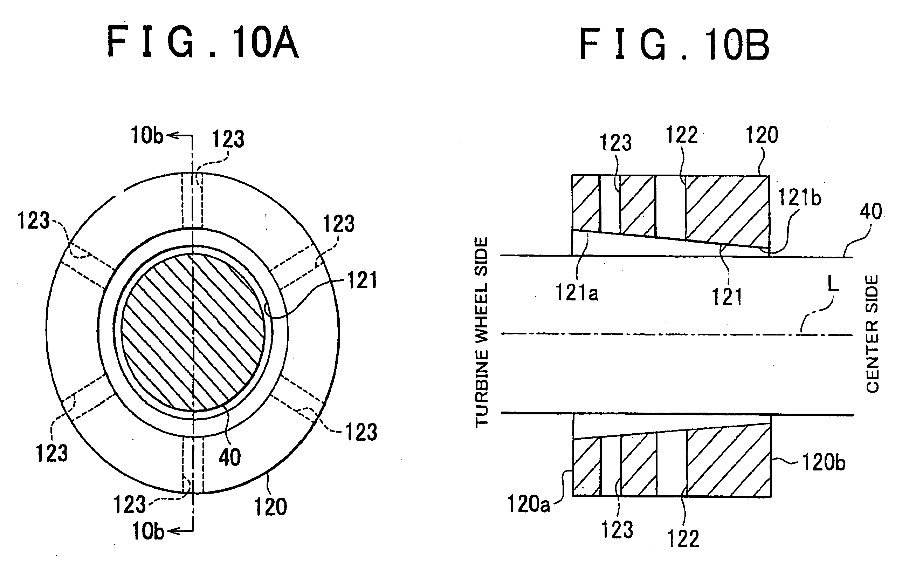

The fourth embodiment can also be carried out in the following forms that arc appropriately modified. It is also permissible to form a tapered insertion hole 121 whose inside diameter gradually becomes larger from the center-side opening portion 121b to the turbine wheel-side opening portions 121a, as shown in FIGS. 10A and 10B.

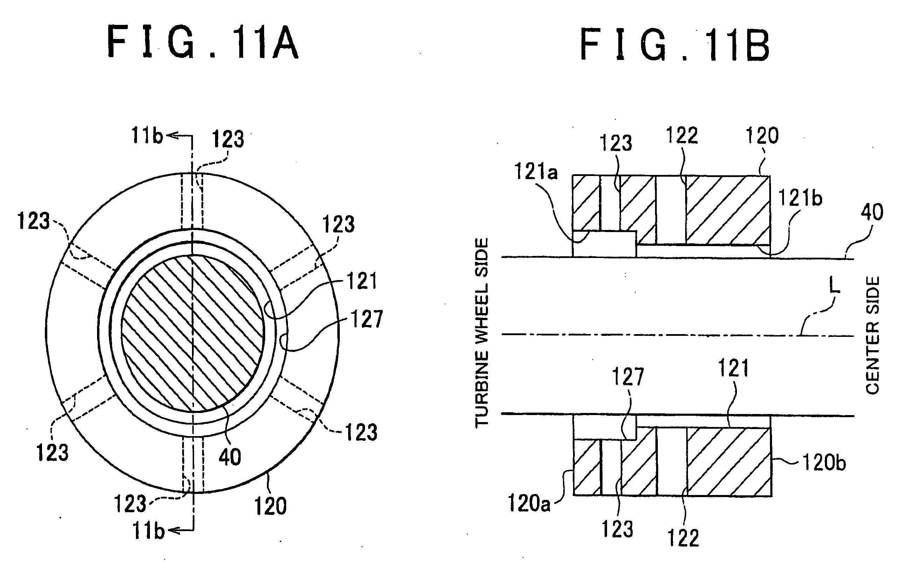

Further, as shown in FIGS. 11A and 11B, a larger-diameter portion whose inside diameter is increased may be provided in a portion of the insertion hole 121 that is at the turbine wheel side of the lubrication oil introduction holes 122.

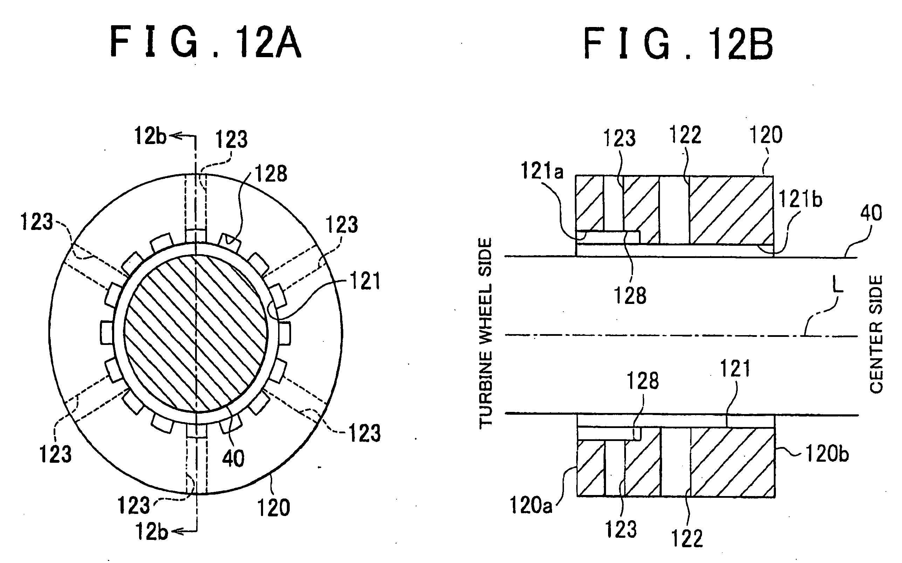

Furthermore, as shown in FIGS. 12A and 12B, grooves 128 may be provided in a portion of the insertion hole 121 that is at the turbine wheel side of the lubrication oil introduction holes 122, so as to make the opening area of the opening portion 121a larger than the opening area of the opening portion 121b. That is, in a construction in which the opening area of the opening portion 121a in the turbine wheel side where the ejection holes 123 are formed is made larger than the opening area of the opening portion 121b, the lubrication oil supplied to the inner periphery of the insertion hole 121 through the lubrication oil introduction holes 122 flows more into the turbine wheel-side portion where the ejection holes 123 are formed.

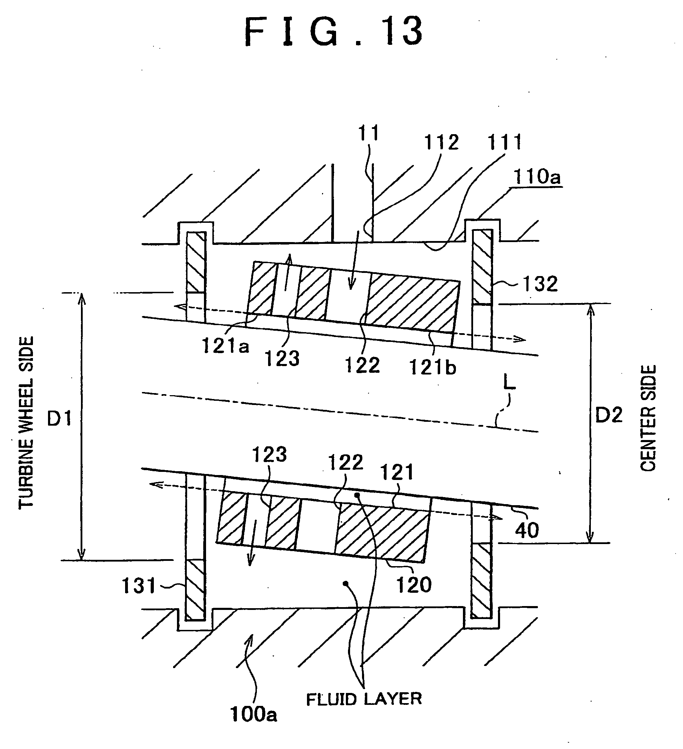

(FIFTH EMBODIMENT) Hereinafter, a fifth embodiment will be described with reference to FIG. 13. The fifth embodiment is different from the first embodiment in the shape of the snap rings. Substantially the same members as described above will be merely suffixed with the same reference characters, and the description thereof will be omitted. Differences between the two embodiments will centrally be described. FIG. 13 is an enlarged sectional view showing a fluid bearing 100a at the turbine wheel side in accordance with this embodiment.

As shown in FIG 13, the inside diameter D1 of a snap ring 131 at the turbine wheel side is set larger than the inside diameter D2 of a snap ring 132 at the center side. A portion of the lubrication oil supplied into a space between the rotary shaft 40 and the inner periphery of the insertion hole 121 flows out from the opening portions 121a, 121b of the floating metal member 120. The lubrication oil that has flown out from the opening portions 121a, 121b flows out through gaps between the rotary shaft 40 and the inner peripheries of the snap rings 131, 132, as shown by dashed-line arrows in FIG 13.

According to the foregoing fifth embodiment, the following effects are obtained in addition to the aforementioned effects (1) to (3). (8) As for the snap rings 131, 132, the inside diameter D1 of the turbine wheel-side snap ring 131 close to the ejection holes 123 is set larger than the inside diameter D2 of the center-side snap ring 132. Therefore, the amount of lubrication oil that flows out from the gap between the rotary shaft 40 and the inner periphery of the snap ring 131 is larger than the amount of lubrication oil that flows out from the gap between the rotary shaft 40 and the inner periphery of the snap ring 132. In consequence, the amount of lubrication oil that flows out from the turbine wheel-side opening portion 121a, near which the ejection holes 123 are formed, is larger than the amount of lubrication oil that flows out from the center-side opening portion 121b, near which the ejection holes 123 are not formed. Therefore, the lubrication oil supplied to the inner periphery of the insertion hole 121 through the lubrication oil introduction holes 122 flows more to the turbine wheel side, so that the amount of lubrication oil ejected from the ejection holes 123 is increased.

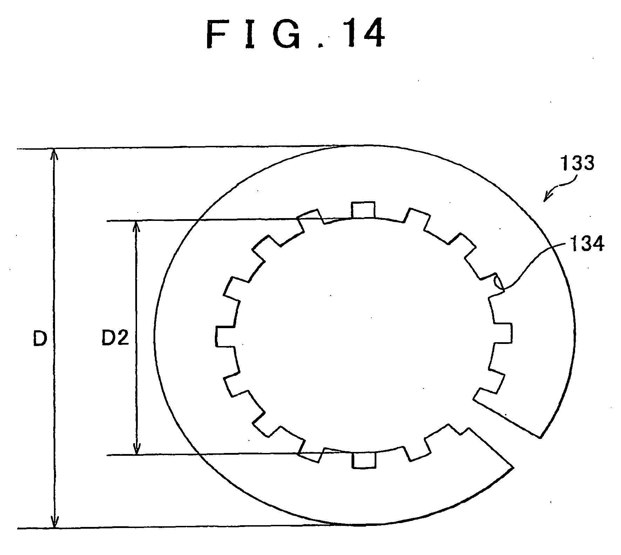

The fifth embodiment can also be carried out in the following forms that are appropriately modified. As a turbine wheel-side snap ring, it is possible to adopt a snap ring 133 whose inner periphery has cutouts 134 as shown in FIG 14. Although the inside diameter D2 of the snap ring 133 is set equal to the inside diameter D2 of the center-side snap ring 132, the provision of the rectangular cutouts 134 makes the opening area of the snap ring 133 larger than the opening area of the snap ring 132 by the amount of the cutouts 134. Therefore, in the case where, in placed of the snap ring 131 of the fifth embodiment, the snap ring 133 is applied as a snap ring at the turbine wheel side, the amount of lubrication oil that flows out from the space between the snap ring 133 and the rotary shaft 40 is larger than the amount of lubrication oil that flows out from the space between the snap ring 132 and the rotary shaft 40, so that the amount of lubrication oil ejected from the ejection holes 123 can be made larger as in the fifth embodiment. Of course, it is also permissible to adopt a construction in which the inside diameter of the turbine wheel-side snap ring close to the ejection holes 123 is set larger than the inside diameter D2 of the center-side snap ring 132 in combination with the construction in which the turbine wheel-side snap ring 133 is provided with a plurality of cutouts 134 formed in the inner peripheral portion. The form or the like of the cutouts 134 is not limited to the that shown in FIG. 14, but the number and shape thereof may be appropriately modified.

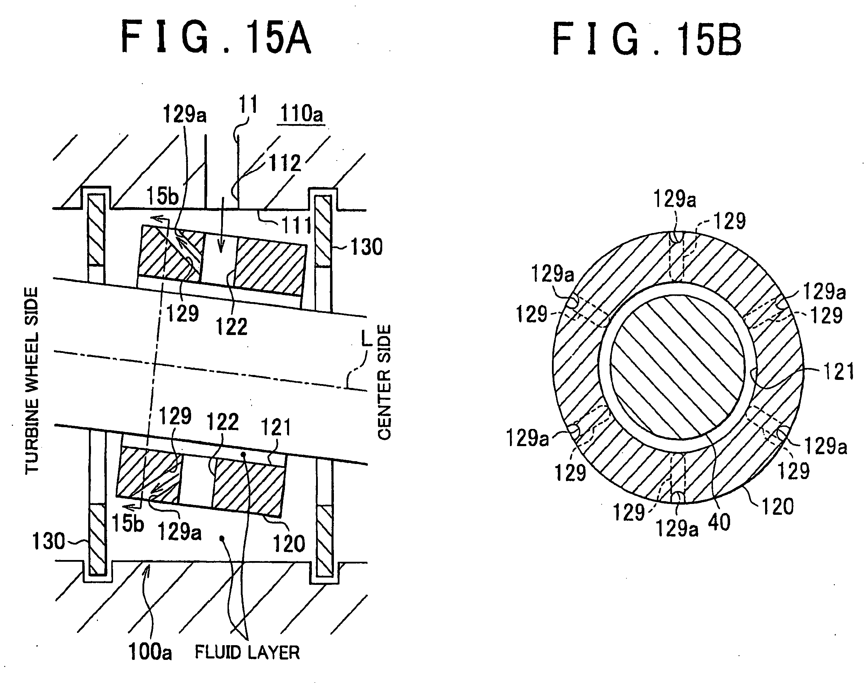

(SIXTH EMBODIMENT) Hereinafter, a sixth embodiment will be described with reference to FIGS. 15A and 15B. FIG. 15A is an enlarged sectional view showing a fluid bearing 100a at the turbine wheel side in accordance with the sixth embodiment, and FIG. 15B is a sectional view showing a structure in a section taken along the line 15b-15b in FIG 15A. In the sixth embodiment, too, the fluid bearing 100a located at the turbine wheel side and the fluid bearing 100b located at the compressor wheel side have substantially the same constructions that are bilaterally symmetrical to each other. Therefore, only the fluid bearing 100a at the turbine wheel 60 will be described below, and the description of the fluid bearing 100b at the compressor wheel 70 will be omitted.

In the first embodiment, a portion of the floating metal member 120 that is at the turbine wheel side of the lubrication oil introduction holes 122 is provided with the ejection holes 123 that extend from the insertion hole 121 and that have openings in the outer periphery of the floating metal member 120, separately from the lubrication oil introduction holes 122. However, in the sixth embodiment, instead of the ejection holes 123, lubrication oil ejection passageways 129 branching from the lubrication oil introduction holes 122 and having openings in a portion of the floating metal member 120 that is at the turbine wheel side of the lubrication oil introduction holes 122 are formed.

Furthermore, as shown in FIG 15B, the lubrication oil ejection passageways 129 are arranged similarly to the ejection holes 123 in the first embodiment. That is, six lubrication oil ejection passageways 129 are formed at equiangular intervals in the circumferential direction of the insertion hole 121. The opening portions 129a of the lubrication oil ejection passageways 129 in the outer peripheral surface of the floating metal member 120 are arranged at equiangular distances in the circumferential direction of the floating metal member 120.

In the fluid bearing 100a having the floating metal member 120 in which the lubrication oil ejection passageways 129 are formed, a portion of the lubrication oil supplied through the lubrication oil introduction holes 122 as shown by an arrow in FIG. 15A is ejected from the lubrication oil ejection passageways 129 toward the inner peripheral surface of the support hole 111 due to centrifugal force.

According to the above-described sixth embodiment, the following effects can be obtained. (9) As the floating metal member 120 and the inner peripheral surface of the support hole 111 approach each other in association with the revolving movement caused by the whirl vibration, the lubrication oil ejected from the lubrication oil ejection passageways 129 produces a reaction force that pushes the floating metal member 120 back toward the center axis of the support hole 111. This will restrain the revolving movement of the rotary shaft 40, and will restrain the occurrence of noise resulting from the whirl vibration of the rotary shaft 40.

Besides, the opening portions 129a of the lubrication oil ejection passageways 129 are provided at the turbine wheel side of the lubrication oil introduction holes 122. Therefore, similarly to the first embodiment, when the whirl vibration occurs, the lubrication oil is ejected from the turbine wheel-side portion of the floating metal member 120, where the outer peripheral surface of the floating metal member 120 and the inner peripheral surface of the support hole 111 are particularly likely to approach each other, toward the inner peripheral surface of the support hole 111, so that the floating metal member 120 can be suitably pushed back toward the center axis of the insertion hole 121.

(10) The opening portions 129a in the outer peripheral surface of the floating metal member 120 are arranged at equiangular intervals on the outer periphery of the floating metal member 120. Therefore, irrespective of the rotation phase of the floating metal member 120, the approach between the lubrication oil ejection passageways 129 and the inner peripheral surface of the support hole 111 is likely to occur. Therefore, the reaction force that pushes the floating metal member 120 back toward the center axis of the support hole 111 can be stably obtained by the lubrication oil ejected from the lubrication oil ejection passageways 129, so that the whirl vibration and therefore the occurrence of noise resulting from the whirl vibration can be more suitably restrained.

The sixth embodiment can also be carried out in the following forms that are appropriately modified. Although in the sixth embodiment, the floating metal member 120 is provided with the six lubrication oil ejection passageways 129, it is also permissible to adopt a construction in which the number of the lubrication oil ejection passageways 129 formed is 1 to 5, or 7 or more. In order to restrain the occurrence of the whirl vibration, as many lubrication oil ejection passageways 129 as possible may be provided.

Funhermore, in the foregoing sixth embodiment, the opening portions 129a of the lubrication oil ejection passageways 129 are formed at equiangular intervals in the circumferential direction of the insertion hole 121. However, this invention is not limited to such a construction. In substantially any construction in which the opening portions 129a of the lubrication oil ejection passageways 129 arc provided at a position in the floating metal member 120 that is apart from the lubrication oil introduction holes 122 in the direction of the axis, the whirl vibration can be restrained by the reaction force of the ejected lubrication oil.

In the foregoing sixth embodiment, the floating metal member 120 is provided with the lubrication oil ejection passageways 129 having the opening portions 129a at a position at the turbine wheel side of the lubrication oil introduction holes 122. However, it is also permissible to adopt a construction in which a lubrication oil ejection passageway having an opening portion at a position that is at the center side of the lubrication oil introduction holes 122 in the floating metal member 120. Besides, it is also permissible to adopt a construction in which lubrication oil ejection passageways 129 having opening portions 129a at a position at the turbine wheel side and lubrication oil ejection passageways having openings at a position at the center side are provided.

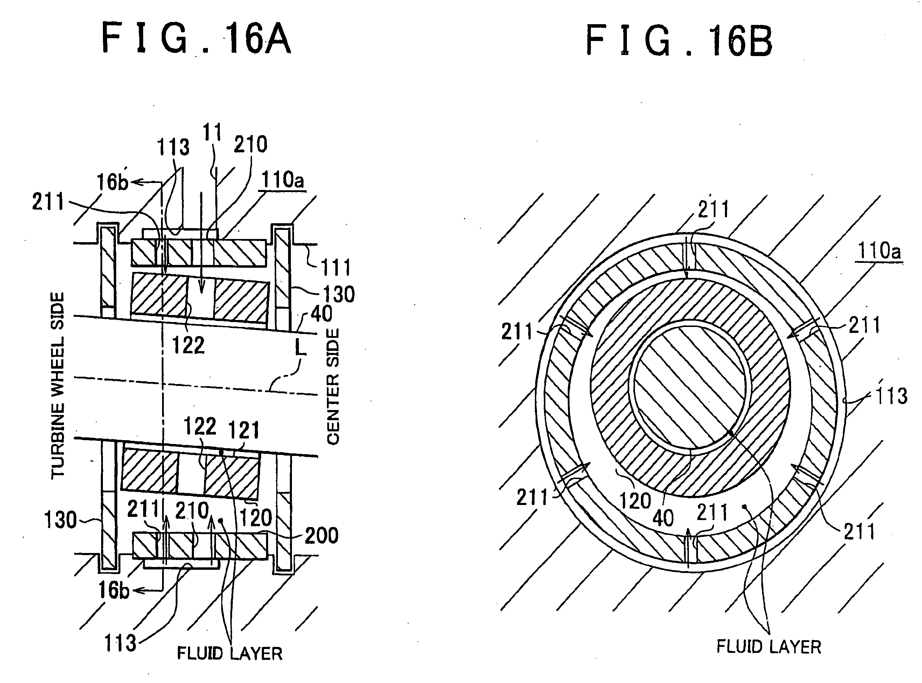

(SEVENTH EMBODIMENT) (Not forming part of the claimed invention) Hereinafter, a seventh embodiment will be described with reference to FIGS. 16[Lambda] and 16B. FIG. 16A is an enlarged sectional view of a fluid bearing 100a at the turbine wheel side in accordance with the seventh embodiment, and FIG. 16B is a sectional view showing a structure in a section taken along the line 16b- 16b in FIG 16A.

In the first embodiment, lubrication oil is ejected from the ejection holes 123 formed in the floating metal member 120 toward the inner peripheral surface of the support hole 111. In the seventh embodiment, on the other hand, a support portion 110a is provided with lubrication oil ejection openings, and lubrication oil is ejected from the lubrication oil ejection opening toward the outer peripheral surface of the floating metal member 120. Hereinafter, substantially the same members as those of the first embodiment will be merely suffixed with the same reference characters, and differences between the two embodiments will be centrally described. Besides, in the seventh embodiment, too, a fluid bearing 100a located at the turbine wheel-side and a fluid bearing 100b located at the compressor wheel-side have substantially the same constructions that are bilaterally symmetrical to each other. Therefore, hereinafter, only the turbine wheel-side fluid bearing 100a will be described, and the description of the compressor wheel-side fluid bearing 100b will be omitted.

As shown in FIG. 16A, an opening portion of a supply passageway 11 in an inner periphery of a support hole 111 is provided with a lubrication oil supply groove 113. The lubrication oil supply groove 113 is formed throughout the entire circumference of the support hole 111 as shown in FIG. 16B.

A cylindrical liner 200 is fitted to the inner peripheral surface of the support hole 111 so as to cover the lubrication oil supply groove 113. As shown in FIG. 16A, in the liner 200, lubrication oil supply openings 210 are formed at a position that can face the lubrication oil introduction holes 122 of the floating metal member 120, and lubrication oil ejection openings 211 are formed at a position at the turbine wheel side of the lubrication oil supply opening 210. As for the lubrication oil ejection openings 211, six openings 211 are formed at equiangular intervals in the circumferential direction of the liner 200 as shown in FIG. 16B. Likewise, six lubrication oil supply openings 210 are formed at equiangular intervals in the circumferential direction of the liner 200.

The lubrication oil supplied through the supply passageway 11 is led to the lubrication oil supply openings 210 and the lubrication oil ejection openings 211 through the lubrication oil supply groove 113, and then is ejected from the lubrication oil supply openings 210 and the lubrication oil ejection openings 211 toward the center of the support hole 111, as shown by arrows in FIGS. 16A and 16B.

The lubrication oil ejected from the lubrication oil supply openings 210 forms a fluid layer of lubrication oil between the floating metal member 120 and the inner peripheral surface of the liner 200, and a portion of the lubrication oil is introduced into the inner periphery of the insertion hole 121 through the lubrication oil introduction holes 122 of the floating metal member 120, forming a fluid layer of lubrication oil between the rotary shaft 40 and the inner periphery of the insertion hole 121.

According to the above-described seventh embodiment, the following effects can be obtained. (11) As the inner peripheral surface of the liner 200 and the outer peripheral surface of the floating metal member 120 approach each other in association with the revolving movement, the lubrication oil ejected from the lubrication oil ejection openings 211 produces a reaction force that pushes the floating metal member 120 back toward the center axis of the support hole 111. This will restrain the revolving movement of the rotary shaft 40, and will restrain the occurrence of noise resulting from the whirl vibration of the rotary shaft 40.

Furthermore, in the seventh embodiment, the lubrication oil ejection openings 211 are provided at the turbine wheel side of the lubrication oil supply openings 210. Therefore, when the whirl vibration occurs, the lubrication oil is ejected toward the floating metal member 120 from the turbine wheel side portion whose distance from the outer peripheral surface of the floating metal member 120 is particularly likely to become short, so that the floating metal member 120 can be suitably pushed back toward the center axis of the insertion hole.

(12) The lubrication oil ejection openings 211 are formed at equiangular intervals in the circumferential direction of the liner 200. Therefore, irrespective of the revolution phase of the floating metal member 120 and the rotary shaft 40 in association with the whirl vibration, the lubrication oil ejection openings 211 and the outer peripheral surface of the floating metal member 120 are likely to approach each other. Therefore, the reaction force that pushes the floating metal member 120 back toward the center axis of the support hole 111 can be stably obtained by the lubrication oil ejected from the lubrication oil ejection openings 211, so that the whirl vibration and therefore the occurrence of noise resulting from the whirl vibration can be more suitably restrained.

The seventh embodiment can also be carried out in the following forms that are appropriately modified. Although in the seventh embodiment, the liner 200 is provided with the six lubrication oil ejection openings 211, it is also permissible to adopt a construction in which the number of the lubrication oil ejection openings formed is 1 to 5, or 7 or more. In order to restrain the occurrence of the whirl vibration, as many lubrication oil ejection openings 211 as possible may be provided.

Furthermore, in the foregoing seventh embodiment, the lubrication oil ejection openings 211 are formed at equiangular intervals in the circumferential direction of the liner 200. However, this invention is not limited to such a construction. In substantially any construction in which the lubrication oil ejection openings 211 are provided at a position in the liner 200 that is apart from the lubrication oil supply openings 210 in the direction of the axis of the rotary shaft 40, the whirl vibration can be restrained by the reaction force of the ejected lubrication oil.

Furthermore, although in the above-described construction, the lubrication oil ejection openings 211 are provided only at a position in the liner 200 that is at the turbine wheel side of the lubrication oil supply openings 210, it is also permissible to adopt a construction in which lubrication oil ejection openings 211 are formed only at a position in the liner 200 that is at the center side of the lubrication oil supply openings 210, or a construction in which lubrication oil ejection openings 211 are formed at both a turbine wheel-side position and a center-side position.

In the seventh embodiment, the support hole 111 is provided with the lubrication oil supply groove 113, and the liner 200 provided with the lubrication oil supply openings 210 and the lubrication oil ejection openings 211 is fitted to the inner periphery of the support hole 111 so as to cover the lubrication oil supply groove 113. However, the invention is not limited to this construction, but it suffices that a lubrication oil ejection opening that ejects lubrication oil toward the center of the support hole 111 be formed at a position in the support portion 110a that is apart from the lubrication oil supply opening in the direction of the axis of the rotary shaft 40.

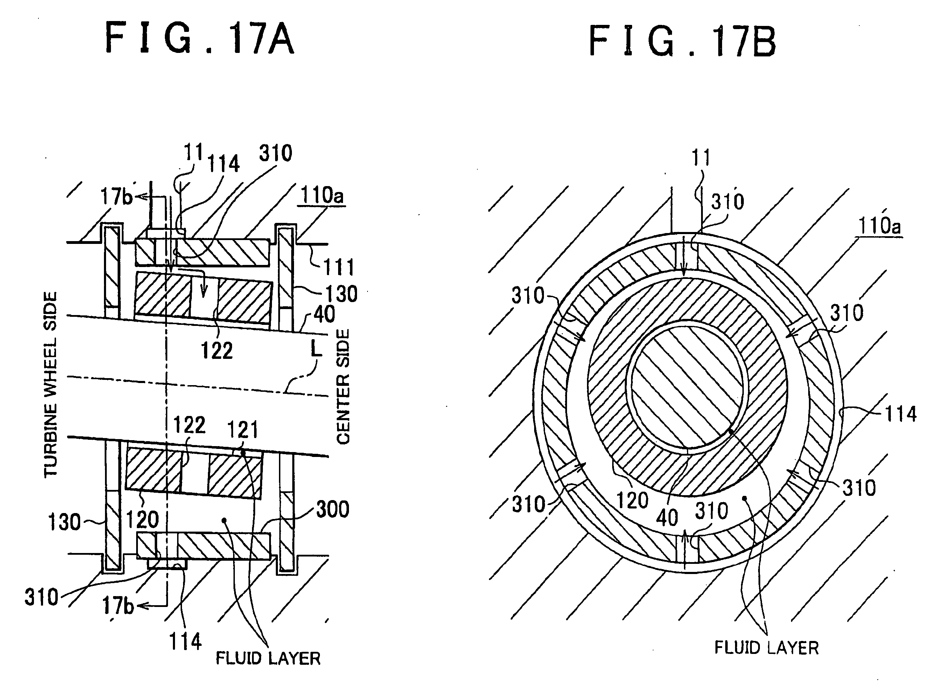

(EIGHTH EMBODIMENT) (Not forming part of the claimed invention) Hereinafter, an eighth embodiment will be described with reference to FIGS. 17A and 17B. FIG 17A is an enlarged sectional view of a fluid bearing 100a at the turbine wheel side in accordance with the eighth embodiment, and FIG. 17B is a sectional view showing a structure in a section taken along the line 17b-17b in FIG. 17A.

In the seventh embodiment, the lubrication oil ejection openings 211 are formed separately from the lubrication oil supply openings 210, and lubrication oil is ejected from the lubrication oil ejection openings 211 toward the outer peripheral surface of the floating metal member 120. In the eighth embodiment, on the other hand, lubrication oil supply openings 310 are formed at a position that is apart in the direction of the axis of a rotary shaft 40 from a position that can face the lubrication oil introduction holes 122 of a floating metal member 120, so that lubrication oil is ejected from the lubrication oil supply openings 310 toward the outer peripheral surface of the floating metal member 120. Hereinafter, substantially the same members as those of the seventh embodiment will be merely suffixed with the same reference characters, and differences between the two embodiments will be centrally described.

As shown in FIG. 17A, an opening portion of a supply passageway 11 in an inner periphery of a support hole 111 is provided with a lubrication oil supply groove 114. The lubrication oil supply groove 114 is formed throughout the entire circumference of the support hole 111 as shown in FIG. 17B. A cylindrical liner 300 is fitted to the inner peripheral surface of the support hole 111 so as to cover the lubrication oil supply groove 114. In the liner 300, as shown in FIG. 17A, lubrication oil supply openings 310 are formed at a position that is at the turbine wheel side of the position that can face the lubrication oil introduction holes 122 of the floating metal member 120. As for the lubrication oil supply openings 310, six openings are formed at equiangular intervals in the circumferential direction of the liner 300 as shown in FIG 17B.

According to the above-described eighth embodiment, the following effects can be obtained. (13) The lubrication oil supply openings 310 are provided with a certain distance in the direction of the axis of the rotary shaft 40 from the position that faces the lubrication oil introduction holes 122 formed in the floating metal member 120. Therefore, as the inner peripheral surface of the support hole 111 and the outer peripheral surface of the floating metal member 120 approach each other in association with the revolving movement, the lubrication oil ejected from the lubrication oil supply openings 310 toward the outer peripheral surface of the floating metal member 120 produces a reaction force that pushes the floating metal member 120 back toward the center axis of the support hole 111. This will restrain the revolving movement of the rotary shaft 40, and will restrain the occurrence of noise resulting from the whirl vibration of the rotary shaft 40.

Furthermore, the lubrication oil supply openings 310 are provided at the turbine wheel side of the position that can face the lubrication oil introduction holes 122 of the floating metal member 120. Therefore, when the whirl vibration occurs, the lubrication oil is ejected toward the floating metal member 120 from the turbine wheel-side portion whose distance from the outer peripheral surface of the floating metal member 120 is particularly likely to become short, so that the floating metal member 120 can be suitably pushed back toward the center axis of the insertion hole.

(14) The lubrication oil supply openings 310 are formed at equiangular intervals in the circumferential direction of the liner 300. Therefore, irrespective of the revolution phase of the floating metal member 120 and the rotary shaft 40 in association with the whirl vibration, the lubrication oil supply openings 310 and the outer peripheral surface of the floating metal member 120 are likely to approach each other. Therefore, the reaction force that pushes the floating metal member 120 back toward the center axis of the support hole 111 can be stably obtained by the lubrication oil ejected from the lubrication oil supply openings 310, so that the whirl vibration and therefore the occurrence of noise resulting from the whirl vibration can be more suitably restrained.

The eighth embodiment can also be carried out in the following forms that are appropriately modified. Although in the eighth embodiment, the liner 300 is provided with the six lubrication oil supply openings 310, it is also permissible to adopt a construction in which the number of the lubrication oil supply openings formed is 1 to 5, or 7 or more. In order to restrain the occurrence of the whirl vibration, as many lubrication oil supply openings 310 as possible may be provided.

Furthermore, in the foregoing eighth embodiment, the lubrication oil supply openings 310 are formed at equiangular intervals in the circumferential direction of the liner 300. However, this invention is not limited to such a construction. In substantially any construction in which the lubrication oil supply openings 310 are provided at a position in the liner 300 that is apart in the direction of the axis from the position that can face the lubrication oil introduction holes 122 of the floating metal member 120, the whirl vibration can be restrained by the reaction force of the ejected lubrication oil.

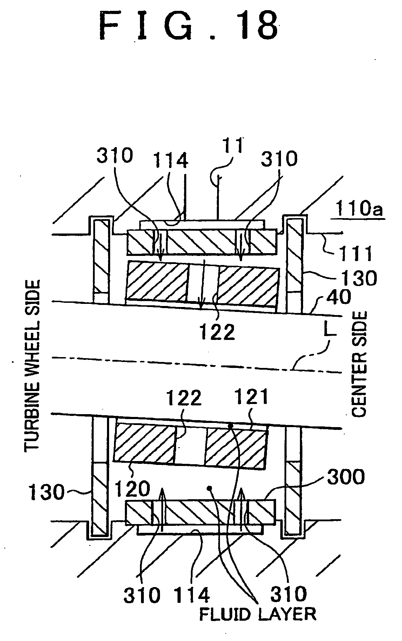

Furthermore, in the above-described construction, the lubrication oil supply openings 310 are provided only at the position that is at the turbine wheel side of the position that can face the lubrication oil introduction holes 122 of the floating metal member 120. However, it is also permissible to adopt a construction in which lubrication oil supply openings 310 arc formed only at a position that is at the center side of the position that can face the lubrication oil introduction holes 122, or a construction in which lubrication oil supply openings 310 are formed at both a position at the turbine wheel side and a position at the center side of the position that can face the lubrication oil introduction holes 122 of the floating metal member 120 as shown in FIG. 18.

In the eighth embodiment, the support hole 11] is provided with the lubrication oil supply groove 114, and the liner 300 provided with the lubrication oil supply openings 310 is fitted to the inner periphery of the support hole 111 so as to cover the lubrication oil supply groove 114. However, the invention is not limited to this construction, but it suffices that a lubrication oil supply opening that ejects lubrication oil toward the center of the support hole 111 be formed at a position in the inner periphery of the support hole 111 that is apart in the direction of the axis of the rotary shaft 40 from the position that faces the lubrication oil introduction holes 122 of the floating metal member 120.

The first to eighth embodiments may also be carried out in the following form that is appropriately modified. That is, although in the foregoing embodiments, the invention is applied to both the turbine wheel-side fluid bearing 100a and the compressor wheel-side fluid bearing 100b, it is also permissible to apply the invention to only one of the turbine wheel-side fluid bearing 100a and the compressor wheel-side fluid bearing 100b.

## Claims

1. A bearing structure of a turbocharger including: a cylindrical floating metal member (120) having an insertion hole (121) into which a rotary shaft (40) that couples a pair of wheels of the turbocharger is inserted and a lubrication oil introduction hole (122) that extends from the insertion hole (121) and that has an opening in an outer peripheral surface of the floating metal member (120); a support portion (110a,110b) having a support hole (111) into which the rotary shaft (40) inserted in the insertion hole (121) is inserted together with the floating metal member (120), and also having a lubrication oil supply opening (112) that is open at a position in an inner periphery of the support hole (111) that faces the lubrication oil introduction hole (122); and a pair of fluid bearings (100a,100b) in which lubrication oil ejected from the lubrication oil supply opening (112) forms fluid layers between the support hole (111) and an outer periphery of the floating metal member (120) and between the insertion hole (121) and the rotary shaft (40), wherein the fluid bearings (100a,100b) are disposed apart from each other in a direction of an axis of the rotary shaft (40), the bearing structure being **characterized in that**:
in the floating metal member (120) of at least one fluid bearing (100a,100b) of the fluid bearings (100a,100b), an ejection hole (123) extending from the insertion hole (121) to the outer periphery of the floating metal member (120) is formed at a position apart from the lubrication oil introduction hole (122) in the direction of the axis of the rotary shaft (40) and wherein the ejection hole (123) is arranged to oppose a portion of the inner wall of the support hole (111).

2. The bearing structure according to claim 1, wherein a plurality of ejection holes (123) are formed at equiangular intervals in a circumferential direction of the insertion hole (121).

3. The bearing structure according to claim 1 or 2, wherein the floating metal member (120) is provided with an oil groove (124) formed in an inner peripheral surface of the insertion hole (121) and extending from the lubrication oil introduction hole (122) to the ejection hole (123).

4. The bearing structure according to any one of claims 1 to 3, wherein the floating metal member (120) is provided with an oil hole (125) formed between the outer periphery of the floating metal member (120) and the insertion hole (121) and linking the lubrication oil introduction hole (122) and the ejection hole (123) in communication.

5. The bearing structure according to any one of claims 1 to 4, wherein, of a center-side portion that is the portion of the floating metal member (120) on the side near the other one of the fluid bearing (100a, 100b) with respect to the lubrication oil introduction hole (122) and a wheel-side portion that is the portion of the floating metal member (120) on the side near an adjacent one of the wheels (60, 70) with respect to the lubrication oil introduction hole (122), at least the wheel-side portion is provided with the ejection hole (123).

6. The bearing structure according to any one of claims 1 to 5, wherein in the floating metal member (120), only one of a center-side portion that is the portion of the floating metal member (120) on the side near the other one of the fluid bearing (100a, 100b) with respect to the lubrication oil introduction hole (122) and a wheel-side portion that is the portion of the floating metal member (120) on the side near an adjacent one of the wheels (60, 70) with respect to the lubrication oil introduction hole (122) is provided with the ejection hole (123), and an area of an opening portion of the insertion hole (121) on one side which is provided with the ejection hole (123) is larger than an area of an opening portion of the insertion hole (121) on the other side.

7. The bearing structure according to claim 6, wherein the insertion hole (121) includes a taper surface (126) whose inside diameter gradually becomes larger from the lubrication oil introduction hole (122) toward the ejection hole (123).

8. The bearing structure according to any one of claims 1 to 7, further comprising: a pair of snap rings (130) which are each disposed apart by a predetermined interval from a corresponding one of two opposite ends of the floating metal member (120), and of each of which an outer peripheral portion is fitted to the inner periphery of the support hole (111), and which restrict movement of the floating metal member (120) in the direction of the axis.

9. The bearing structure according to claim 8, wherein only one of a center-side portion that is the portion of the floating metal member (120) on the side near the other one of the fluid bearing (100a, 100b) with respect to the lubrication oil introduction hole (122) and a wheel-side portion that is the portion of the floating metal member (120) on the side near an adjacent one of the wheels (60, 70) with respect to the lubrication oil introduction hole (122) is provided with the ejection hole (123), and wherein, of the two snap rings (130), a snap ring (130) that is closer to the ejection hole (123) is larger in inside diameter than the other one of the snap rings (130).

10. The bearing structure according to claim 8 or 9, wherein only one of a center-side portion that is the portion of the floating metal member (120) on the side near the other one of the fluid bearing (100a, 100b) with respect to the lubrication oil introduction hole (122) and a wheel-side portion that is the portion of the floating metal member (120) on the side near an adjacent one of the wheels (60, 70) with respect to the lubrication oil introduction hole (122) is provided with the ejection hole (123), and wherein, of the two snap rings (130), a snap ring (130) that is closer to the ejection hole (123) is provided with a cutout (134) formed in an inner periphery of the snap ring (130).

11. A bearing structure of a turbocharger including: a cylindrical floating metal member (120) having an insertion hole (121) into which a rotary shaft (40) that couples a pair of wheels of the turbocharger is inserted and a lubrication oil introduction hole (122) that extends from the insertion hole (121) and that has an opening in an outer peripheral surface of the floating metal member (120); a support portion (110a,110b) having a support hole (111) into which the rotary shaft (40) inserted in the insertion hole (121) is inserted together with the floating metal member (120), and also having a lubrication oil supply opening (112) that is open at a position in an inner periphery of the support hole (111) that faces the lubrication oil introduction hole (122); and a pair of fluid bearings (100a,100b) in which lubrication oil ejected from the lubrication oil supply opening (112) forms fluid layers between the support hole (111) and an outer periphery of the floating metal member (120) and between the insertion hole (121) and the rotary shaft (40), wherein the fluid bearings (100a,100b) are disposed apart from each other in a direction of an axis of the rotary shaft (40), the bearing structure being **characterized in that**: the floating metal member (120) is provided with a lubrication oil ejection passageway (129) that branches from the lubrication oil introduction hole (122) and that has an opening at a position in the outer periphery of the floating metal member (120) that is apart from an opening portion of the lubrication oil introduction hole (122) in the outer periphery of the floating metal member (120) in the direction of the axis of the rotary shaft (40).

12. The bearing structure according to claim 11, wherein a plurality of lubrication oil ejection passageways (129) are formed so that openings of the lubrication oil ejection passageways (129) are formed at equiangular intervals in a circumferential direction of the insertion hole (121) of the floating metal member (120).

## Patentansprüche

1. Lagerstruktur eines Turboladers, welche einschließt: ein zylindrisches schwimmendes Metallteil (120), welche ein Einfügungsloch (121) hat, in welches eine rotierende Welle (40), die ein Paar an Rädern des Turboladers kuppelt, eingefügt ist, und welche ein Schmieröleinleitungsloch (122) hat, welches sich von dem Einfügungsloch (121) erstreckt und welches eine Öffnung in einer äußeren peripheren Oberfläche des schwimmenden Metallteils(120) hat, einen Tragabschnitt (110a, 110b), welcher ein Tragloch (111) hat, in welches die rotierende Welle (40), die in das Einfügungsloch (121) eingefügt ist, zusammen mit dem schwimmenden Metallteil (120) eingefügt ist, und welcher auch eine Schmierölzuführöffnung (112) hat, welche an einer Position in einer inneren Peripherie des Traglochs (111) offen ist, welche dem Schmieröleinleitungsloch (122) zugewandt ist, und ein Paar an Fluidlagern (100a, 100b), in welchen Schmieröl, das von der Schmierölzuführöffnung (112) ausgegeben wird, zwischen dem Tragloch (111) und einer äußeren Peripherie des schwimmenden Metallteils (120) und zwischen dem Einfügungsloch (120) und der rotierenden Welle (40) Fluidschichten bildet, wobei die Fluidlager (1 00a, 100b) in einer Axialrichtung der rotierenden Welle (40) voneinander beabstandet angeordnet sind, wobei die Lagerstruktur **dadurch gekennzeichnet ist, dass**:
in dem schwimmenden Metallteil (120) zumindest eines Fluidlagers (100a, 100b) der Fluidlager (100a, 100b) ein Ausgabeloch (123), welches sich von dem Einfügungsloch (121) zu der äußeren Peripherie des schwimmenden Metallteils (120) erstreckt, an einer Position, welche von dem Schmieröleinleitungsloch (122) in der Axialrichtung der rotierenden Welle (40) beabstandet ist, gebildet ist und wobei das Ausgabeloch (123) angeordnet ist, um einem Abschnitt der Innenwand des Tragelochs (111) gegenüber zu liegen.

2. Lagerstruktur gemäß Anspruch 1, wobei eine Vielzahl an Ausgabelöchern (123) in Intervallen gleichen Winkels in einer Umfangsrichtung des Einfügungslochs (121) gebildet ist.

3. Lagerstruktur gemäß Anspruch 1 oder 2, wobei das schwimmende Metallteil (120) mit einer Ölnut (124) versehen ist, welche an einer inneren peripheren Oberfläche des Einfügungslochs (121) gebildet ist und sich von dem Schmieröleinleitungsloch (122) zu dem Ausgabeloch (123) erstreckt.

4. Lagerstruktur gemäß einem der Ansprüche 1 bis 3, wobei das schwimmende Metallteil (120) mit einem Ölloch (125) versehen ist, welches zwischen der äußeren Peripherie des schwimmenden Metallteils (120) und dem Einleitungsloch (121) gebildet ist und das Schmieröleinleitungsloch (122) und das Ausgabeloch (123) kommunizierend verknüpft.

5. Lagerstruktur gemäß einem der Ansprüche 1 bis 4, wobei von den Abschnitten mittelseitiger Abschnitt, welcher auf das Schmieröleinleitungsloch (122) bezogen der Abschnitt des schwimmenden Metallteils (120) an der Seite nahe des anderen Fluidlagers (100a, 100b) ist, und radseitiger Abschnitt, welcher auf das Schmieröleinleitungsloch (122) bezogen der Abschnitt des schwimmenden Metallteils (120) an der Seite nahe einem benachbartes der Räder (60, 70) ist, zumindest der radseitige Abschnitt mit dem Ausgabeloch (123) versehen ist.

6. Lagerstruktur gemäß einem der Ansprüche 1 bis 5, wobei in dem schwimmenden Metallteil (120) nur einer der Abschnitte mittelseitiger Abschnitt, welcher auf das Schmieröleinleitungsloch (122) bezogen der Abschnitt des schwimmenden Metallteils (120) an der Seite nahe des anderen Fluidlagers (1 00a, 100b) ist, und radseitiger Abschnitt, welcher auf das Schmieröleinleitungsloch (122) bezogen der Abschnitt des schwimmenden Metallteils (120) an der Seite nahe einem benachbarten der Räder (60, 70) ist, mit dem Ausgabeloch (123) versehen ist und ein Gebiet eines Öffnungsabschnitts des Einfügungslochs (121) an einer Seite, welche mit dem Ausgabeloch (123) versehen ist, größer als ein Gebiet eines Öffnungsabschnitts des Einfügungslochs (121) an der anderen Seite ist.

7. Lagerstruktur gemäß Anspruch 6, wobei das Einfügungsloch (121) eine konische Oberfläche (126) einschließt, deren Innendurchmesser von dem Schmieröleinleitungsloch (122) zu dem Ausgabeloch (123) hin allmählich größer wird.

8. Lagerstruktur gemäß einem der Ansprüche 1 bis 7, die ferner beinhaltet: ein Paar an Sprengringen (130), von welchen jeder um ein vorab festgelegtes Intervall von einem entsprechenden Ende zweier entgegen gesetzter Enden des schwimmenden Metallteils (120) beabstandet angeordnet ist und ein äußerer peripherer Abschnitt jedes dieser an die innere Peripherie des Traglochs (111) gepasst ist und welche eine Bewegung des schwimmenden Metallteils (120) in der Richtung der Achse beschränken.

9. Lagerstruktur gemäß Anspruch 8, wobei nur einer der Abschnitte mittelseitiger Abschnitt, welcher auf das Schmieröleinleitungsloch (122) bezogen der Abschnitt des schwimmenden Metallteils (120) an der Seite nahe des anderen Fluidlagers (100a, 100b) ist, und radseitiger Abschnitt, welcher auf das Schmieröleinleitungsloch (122) bezogen der Abschnitt des schwimmenden Metallteils (120) an der Seite nahe eines benachbarten der Räder (60, 70) ist, mit dem Ausgabeloch (123) versehen ist und wobei ein Sprengring (130) der zwei Sprengringe (130), welcher dem Ausgabeloch (123) näher ist, einen größeren Innendurchmesser als der andere der zwei Sprengringe (130) aufweist.

10. Lagerstruktur gemäß Anspruch 8 oder 9, wobei nur einer der Abschnitte mittelseitiger Abschnitt, welcher auf das Schmieröleinleitungsloch (122) bezogen der Abschnitt des schwimmenden Metallteils (120) an der Seite nahe des anderen Fluidlagers (100a, 100b) ist, und radseitiger Abschnitt, welcher auf das Schmieröleinleitungsloch (122) bezogen der Abschnitt des schwimmenden Metallteils (120) an der Seite nahe eines benachbarten der Räder (60, 70) ist, mit dem Ausgabeloch (123) versehen ist und wobei ein Sprengring (130) der zwei Sprengringe (130), welcher dem Ausgabeloch (123) näher ist, mit einer Ausnehmung (134), welche an einer inneren Peripherie des Sprengrings (130) gebildet ist, versehen ist.

11. Lagerstruktur eines Turboladers, welche einschließt: ein zylindrisches schwimmendes Metallteil (120), welche ein Einfügungsloch (121) hat, in welches eine rotierende Welle (40), die ein Paar an Rädern des Turboladers koppelt, eingefügt ist, und welche ein Schmieröleinleitungsloch (122) hat, welches sich von dem Einfügungsloch (121) erstreckt und welches eine Öffnung in einer äußeren peripheren Oberfläche des schwimmenden Metallteils(120) hat, einen Tragabschnitt (110a, 110b), welcher ein Tragloch (111) hat, in welches die rotierende Welle (40), die in das Einfügungsloch (121) eingefügt ist, zusammen mit dem schwimmenden Metallteil (120) eingefügt ist, und welcher auch eine Schmierölzuführöffnung (112) hat, welche an einer Position in einer inneren Peripherie des Traglochs (111) offen ist, welche dem Schmieröleinleitungsloch (122) zugewandt ist, und ein Paar an Fluidlagern (100a, 100b), in welchen Schmieröl, das von der Schmierölzuführöffnung (112) ausgegeben wird, zwischen dem Tragloch (111) und einer äußeren Peripherie des schwimmenden Metallteils (120) und zwischen dem Einfügungsloch (120) und der rotierenden Welle (40) Fluidschichten bildet, wobei die Fluidlager (1 00a, 100b) in einer Axialrichtung der rotierenden Welle (40) voneinander beabstandet angeordnet sind, wobei die Lagerstruktur **dadurch gekennzeichnet ist, dass**:
das schwimmende Metallteil (120) mit einem Schmierölausgabedurchlass (129) versehen ist, welcher von dem Schmieröleinleitungsloch (122) abzweigt und welcher eine Öffnung an einer Position in der äußeren Peripherie des schwimmenden Metallteils (120) hat, welche von einem Öffnungsabschnitt des Schmieröleinleitungslochs (122) in der äußeren Peripherie des schwimmenden Metallteils (120) in der Axialrichtung der rotierenden Welle (40) beabstandet ist.

12. Lagerstruktur gemäß Anspruch 11, wobei eine Vielzahl an Schmierölausgabedurchlässen (129) so gebildet sind, dass Öffnungen der Schmierölausgabedurchlässe (129) in Intervallen gleichen Winkels in einer Umfangsrichtung des Einfügungslochs (121) des schwimmenden Metallteils (120) gebildet sind.

## Revendications

1. Structure porteuse d'un turbocompresseur comprenant : un élément métallique flottant cylindrique (120) ayant un trou d'insertion (121) dans lequel un arbre rotatif (40) qui couple une paire de roues du turbocompresseur est inséré et un trou d'introduction d'huile de lubrification (122) qui s'étend à partir du trou d'insertion (121) et qui a une ouverture dans une surface périphérique externe de l'élément métallique flottant (120) ; une partie de support (110a, 110b) ayant un trou de support (111) dans lequel l'arbre rotatif (40) inséré dans le trou d'insertion (121) est inséré conjointement avec l'élément métallique flottant (120), et ayant également une ouverture d'alimentation en huile de lubrification (112) qui est ouverte dans une position dans une périphérie interne du trou de support (111) qui fait face au trou d'introduction d'huile de lubrification (122) ; et une paire de paliers fluides (100a, 100b) dans lesquels l'huile de lubrification éjectée par l'ouverture d'alimentation en huile de lubrification (112) forme des couches de fluide entre le trou de support (111) et une périphérie externe de l'élément métallique flottant (120) et entre le trou d'insertion (121) et l'arbre rotatif (40), dans laquelle les paliers fluides (100a, 100b) sont disposés à distance l'un de l'autre dans une direction d'un axe de l'arbre rotatif (40), la structure porteuse étant **caractérisée en ce que** :
dans l'élément métallique flottant (120) d'au moins un palier fluide (100a, 100b) des paliers fluides (100a, 100b), un trou d'éjection (123) s'étendant à partir du trou d'insertion (121) jusqu'à la périphérie externe de l'élément métallique flottant (120) est formé dans une position à distance du trou d'introduction d'huile de lubrification (122) dans la direction de l'axe de l'arbre rotatif (40), et dans laquelle le trou d'éjection (123) est agencé pour s'opposer à une partie de la paroi interne du trou de support (111).

2. Structure porteuse selon la revendication 1, dans laquelle une pluralité de trous d'éjection (123) sont formés à intervalles équiangulaires dans une direction circonférentielle du trou d'insertion (121).

3. Structure porteuse selon la revendication 1 ou 2, dans laquelle l'élément métallique flottant (120) est prévu avec une rainure d'huile (124) formée dans une surface périphérique interne du trou d'insertion (121) et s'étendant à partir du trou d'introduction d'huile de lubrification (122) jusqu'au trou d'éjection (123).

4. Structure porteuse selon l'une quelconque des revendications 1 à 3, dans laquelle l'élément métallique flottant (120) est prévu avec un trou d'huile (125) formé entre la périphérie externe de l'élément métallique flottant (120) et le trou d'insertion (121) et reliant le trou d'introduction d'huile de lubrification (122) et le trou d'éjection (123) en communication.

5. Structure porteuse selon l'une quelconque des revendications 1 à 4, dans laquelle, parmi une partie du côté du centre qui est la partie de l'élément métallique flottant (120) située du côté à proximité de l'autre palier fluide (100a, 100b) par rapport au trou d'introduction d'huile de lubrification (122) et une partie du côté de la roue qui est la partie de l'élément métallique flottant (120) située du côté à proximité d'une roue adjacente des roues (60, 70) par rapport au trou d'introduction d'huile de lubrification (122), on prévoit au moins une partie du côté de la roue avec un trou d'éjection (123).

6. Structure porteuse selon l'une quelconque des revendications 1 à 5, dans laquelle, dans l'élément métallique flottant (120), seule l'une parmi une partie du côté du centre qui est la partie de l'élément métallique flottant (120) située du côté à proximité de l'autre palier fluide (100a, 100b) par rapport au trou d'introduction d'huile de lubrification (122) et une partie du côté de la roue qui est la partie de l'élément métallique flottant (120) située du côté à proximité d'une roue adjacente des roues (60, 70) par rapport au trou d'introduction d'huile de lubrification (122), est prévue avec le trou d'éjection (123), et une zone d'une partie d'ouverture du trou d'insertion (121) d'un côté qui est doté du trou d'éjection (123) est plus grande qu'une zone d'une partie d'ouverture du trou d'insertion (121) de l'autre côté.

7. Structure porteuse selon la revendication 6, dans laquelle le trou d'insertion (121) comprend une surface conique (126) dont le diamètre interne s'agrandit progressivement, du trou d'introduction d'huile de lubrification (122) vers le trou d'éjection (123).

8. Structure porteuse selon l'une quelconque des revendications 1 à 7, comprenant en outre : une paire d'anneaux élastiques (130) qui sont chacun disposés à distance selon un intervalle prédéterminé d'une extrémité correspondante des deux extrémités opposées de l'élément métallique flottant (120), et parmi chacune desquelles, une partie périphérie externe est montée sur la périphérie interne du trou de support (111), et qui limitent le mouvement de l'élément métallique flottant (120) dans la direction de l'axe.

9. Structure porteuse selon la revendication 8, dans laquelle seule l'une parmi une partie du côté du centre qui est la partie de l'élément métallique flottant (120) située du côté à proximité de l'autre palier fluide (100a, 100b) par rapport au trou d'introduction d'huile de lubrification (122) et une partie du côté de la roue qui est la partie de l'élément métallique flottant (120) située du côté à proximité d'une roue adjacente des roues (60, 70) par rapport au trou d'introduction d'huile de lubrification (122), est prévue avec un trou d'éjection (123), et dans laquelle, parmi les deux anneaux élastiques (130), un anneau élastique (130) qui est plus près du trou d'éjection (123) a un plus grand diamètre interne que l'autre anneau des anneaux élastiques (130).

10. Structure porteuse selon la revendication 8 ou 9, dans laquelle seule l'une parmi une partie du côté du centre qui est la partie de l'élément métallique flottant (120) située du côté à proximité de l'autre palier fluide (100a, 100b) par rapport au trou d'introduction d'huile de lubrification (122) et une partie du côté de la roue qui est la partie de l'élément métallique flottant (120) située du côté à proximité d'une roue adjacente des roues (60, 70) par rapport au trou d'introduction d'huile de lubrification (122), est prévue avec le trou d'éjection (123), et dans laquelle, parmi les deux anneaux élastiques (130), un anneau élastique (130) qui est plus près du trou d'éjection (123) est prévu avec une découpe (134) formée dans une périphérie interne de l'anneau élastique (130).

11. Structure porteuse d'un turbocompresseur comprenant : un élément métallique flottant cylindrique (120) ayant un trou d'insertion (121) dans lequel un arbre rotatif (40) qui couple une paire de roues du turbocompresseur est inséré et un trou d'introduction d'huile de lubrification (122) qui s'étend à partir du trou d'insertion (121) et qui a une ouverture dans une surface périphérique externe de l'élément métallique flottant (120) ; une partie de support (110a, 110b) ayant un trou de support (111) dans lequel l'arbre rotatif (40) inséré dans le trou d'insertion (121) est inséré conjointement avec l'élément métallique flottant (120), et ayant également une ouverture d'alimentation en huile de lubrification (112) qui est ouverte dans une position située dans une périphérie interne du trou de support (111) qui fait face au trou d'introduction d'huile de lubrification (122) ; et une paire de paliers fluides (100a, 100b) dans lesquels l'huile de lubrification éjectée par l'ouverture d'alimentation en huile de lubrification (112) forme des couches de fluide entre le trou de support (111) et une périphérie externe de l'élément métallique flottant (120) et entre le trou d'insertion (121) et l'arbre rotatif (40), dans laquelle les paliers fluides (100a, 100b) sont disposés à distance l'un de l'autre dans une direction d'un axe de l'arbre rotatif (40), la structure porteuse étant **caractérisée en ce que** :
l'élément métallique flottant (120) est prévu avec une voie de passage d'éjection d'huile de lubrification (129) qui bifurque du trou d'introduction d'huile de lubrification (122) et qui a une ouverture dans une position située dans la périphérie externe de l'élément métallique flottant (120) qui est éloigné d'une partie d'ouverture du trou d'introduction d'huile de lubrification (122) dans la périphérie externe de l'élément métallique flottant (120) dans la direction de l'axe de l'arbre rotatif (40).

12. Structure porteuse selon la revendication 11, dans laquelle une pluralité de voies de passage d'éjection d'huile de lubrification (129) sont formées de sorte que des ouvertures des voies de passage d'éjection d'huile de lubrification (129) sont formées à intervalles équiangulaires dans une direction circonférentielle du trou d'insertion (121) de l'élément métallique flottant (120).
